(19) **Europäisches Patentamt / European Patent Office / Office européen des brevets**

(11) **EP 4 749 483 A1**

(12) **EUROPEAN PATENT APPLICATION**
published in accordance with Art. 153(4) EPC

(43) Date of publication:
**27.05.2026 Bulletin 2026/22**

(21) Application number: **24850527.3**

(22) Date of filing: **26.03.2024**

(51) International Patent Classification (IPC):
*G06F 17/16* (2006.01)

(52) Cooperative Patent Classification (CPC):
**G06F 9/50; G06F 15/177; G06F 15/78; G06F 17/16; G06N 3/0455; G06N 3/063**

(86) International application number:
**PCT/CN2024/083829**

(87) International publication number:
**WO 2025/030869 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.08.2023 CN 202310988066**
**26.02.2024 CN 202410210715**

(71) Applicant: **HUAWEI TECHNOLOGIES CO., LTD.**
**Shenzhen 518129 (CN)**

(72) Inventors:
• **ZHOU, Huaman**
**Shenzhen, Guangdong 518129 (CN)**
• **BAI, Youhui**
**Shenzhen, Guangdong 518129 (CN)**

• **WANG, Sen**
**Shenzhen, Guangdong 518129 (CN)**
• **CHEN, Renhai**
**Shenzhen, Guangdong 518129 (CN)**
• **ZHANG, Gong**
**Shenzhen, Guangdong 518129 (CN)**
• **ZHANG, Changshan**
**Shenzhen, Guangdong 518129 (CN)**
• **FU, Yong**
**Shenzhen, Guangdong 518129 (CN)**
• **RAN, Jiewen**
**Shenzhen, Guangdong 518129 (CN)**
• **LI, Fuhua**
**Shenzhen, Guangdong 518129 (CN)**

(74) Representative: **Maiwald GmbH**
**Engineering**
**Elisenhof**
**Elisenstrasse 3**
**80335 München (DE)**

(54) **DATA PROCESSING METHOD AND APPARATUS**

(57) This application provides a data processing method and apparatus, and relates to the computer field. The method includes: The method is applied to a chip. The chip includes a computing core. The method includes: determining a first result O' of performing calculation on a first matrix, a first submatrix K', and a second submatrix V' based on a self-attention (self-attention) mechanism, where the first matrix is a query (query) matrix Q or a submatrix of the matrix Q, the first submatrix K' is a submatrix of a key (key) matrix K, and the second submatrix V' is a submatrix of a value (value) matrix V. The computing core determines a second result O" of performing calculation on the first matrix, a third submatrix K", and a fourth submatrix V' based on the self-attention mechanism, where the third submatrix K" is a submatrix of the matrix K other than the first submatrix K', and the fourth submatrix V' is a submatrix of the matrix V other than the second submatrix V'. The computing core determines a third result based on at least the first result O' and the second result O", where the third result is a matrix O obtained by performing calculation on the matrix Q, the matrix K, and the matrix V based on the self-attention mechanism, or a submatrix of the matrix O.

EP 4 749 483 A1

60

Computing core 62n

⋮

Computing core 622

Control apparatus
61

Computing core 621

FIG. 18

**Description**

This application claims priorities to Chinese Patent Application No. 202310988066.5, filed with the China National Intellectual Property Administration on August 7, 2023 and entitled "DATA PROCESSING METHOD AND APPARATUS", and to Chinese Patent Application No. 202410210715.3, filed with the China National Intellectual Property Administration on February 26, 2024 and entitled "DATA PROCESSING METHOD AND APPARATUS", both of which are incorporated herein by reference in their entireties.

**TECHNICAL FIELD**

This application relates to the computer field, and in particular, to a data processing method and apparatus.

**BACKGROUND**

In the context of big data and big computing, artificial intelligence technologies represented by machine learning develop rapidly, and become a core foundation of key technologies like computer vision, intelligent speech, natural language processing, biometric recognition, and recommendation systems. The artificial intelligence technologies are widely applied to the fields of financial risk control, medical diagnosis, smart cities, and the like, and gradually become one of major forces that promote information revolution and social development.

In a machine learning model, sequence data is usually processed by using a self-attention (self-attention) mechanism, so that the model can focus on a relationship between input sequence elements, to capture a dependency relationship between the sequence elements.

Therefore, how to improve calculation efficiency of performing, based on the self-attention mechanism, calculation on a query (query) matrix, a key (key) matrix, and a value (value) matrix that correspond to the sequence data is a problem that needs to be resolved currently.

**SUMMARY**

This application provides a data processing method and apparatus, to improve operation efficiency during computing of a self-attention mechanism.

According to a first aspect, a data processing method is provided. The method is applied to a chip. The chip includes a computing core. The method includes: The computing core determines a first result O' of performing calculation on a first matrix, a first submatrix K', and a second submatrix V' based on a self-attention (self-attention) mechanism, where the first matrix is a query (query) matrix Q or a submatrix of the matrix Q, the first submatrix K' is a submatrix of a key (key) matrix K, the second submatrix V' is a submatrix of a value (value) matrix $V, Q, K, V \in \mathbb{R}^{N \times d}$, $K', V' \in \mathbb{R}^{y_1 \times d}$, $y_1$, N, and d are positive integers, x≤N, and $y_1$ <N. The computing core determines a second result O" of performing calculation on the first matrix, a third submatrix K", and a fourth submatrix V' based on the self-attention mechanism, where the third submatrix K' is a submatrix of the matrix K other than the first submatrix K', the fourth submatrix V" is a submatrix of the matrix V other than the second submatrix $V', K'', V'' \in \mathbb{R}^{y_2 \times d}$, and $y_2$ is a positive integer less than N-$y_1$. The computing core determines a third result based on at least the first result O' and the second result O", where the third result is a matrix O obtained by performing calculation on the matrix Q, the matrix K, and the matrix V based on the self-attention mechanism, or a submatrix of the matrix O, and $O \in \mathbb{R}^{N \times d}$.

In an implementation, the first matrix is the query (query) matrix Q, and the third result is the matrix O obtained by performing calculation on the matrix Q, the matrix K, and the matrix V based on the self-attention mechanism.

In an implementation, the first matrix is a submatrix Q' of the matrix Q, $Q' \in \mathbb{R}^{x \times d}$, x is a positive integer less than N, the third result is a submatrix O" of the matrix O obtained by performing calculation on the matrix Q, the matrix K, and the matrix V based on the self-attention mechanism, $O''' \in \mathbb{R}^{x \times d}$, and the method further includes: obtaining the matrix O based on at least the third result.

In the foregoing method, the key (key) matrix K is split into submatrices (where the submatrices include the first submatrix K' and the third submatrix K") by row, and the value (value) matrix V is split into submatrices (where the submatrices include the second submatrix V' and the fourth submatrix V') by row. In addition, during an operation, the computing core is enabled to separately determine the first result O' (to be specific, the result of performing calculation on the first matrix, the first submatrix K', and the second submatrix V' based on the self-attention mechanism) and the second result O" (to be specific, the result of performing calculation on the first matrix, the third submatrix K", and the fourth submatrix V" based on the self-attention mechanism), and then determine the third result (to be specific, a calculation result that corresponds to x elements and that is obtained by performing calculation on the matrix Q, the matrix K, and the matrix V based on the self-attention mechanism) based on at least the first result O' and the second result O". In this way, in comparison with performing an overall operation on the matrix Q, the matrix K, and the matrix V, in the foregoing method of this application, the matrix K and the matrix V are divided into submatrices with a small data amount. Therefore, a data amount of intermediate data generated during an operation is small. In this way, a data amount of intermediate data can be reduced. Because an SRAM capacity of the computing core is limited, intermediate data that exceeds the SRAM capacity is stored in an HBM. Therefore, the intermediate data with a small data amount enables the chip to store, as much as possible, the intermediate data generated during the operation in an SRAM with a higher read speed, to reduce an amount of access from the chip to the HBM.

In an implementation, the method further includes: The computing core determines a value of x, a value of $y_1$, and/or a value of $y_2$ based on the SRAM capacity of the computing core.

In the foregoing implementation, data amounts of the first submatrix K', the second submatrix V', the third submatrix K", and the fourth submatrix V" that are obtained through division can adapt to the SRAM capacity of the computing core. In this way, in a process of performing calculation on the first submatrix K', the second submatrix V', the third submatrix K", and the fourth submatrix V" based on the self-attention mechanism, the computing core can store data by using the SRAM as much as possible, to avoid storing data in the HBM.

In an implementation, that the computing core determines the second result O" of performing calculation on the first matrix, the third submatrix K", and the fourth submatrix V" based on the self-attention mechanism includes: The computing core determines a first intermediate result S based on the first matrix and the third submatrix K', where the first intermediate result S is a result of performing matrix multiplication on the first matrix and a transposed matrix $K"^T$ of the third submatrix K". The computing core determines a second intermediate result P based on the first intermediate result S, where the second intermediate result P is a result of normalizing the first intermediate result S. The computing core determines the second result O" based on the second intermediate result P and the fourth submatrix V", where the second result O" is a result of performing matrix multiplication on the second intermediate result P and the fourth submatrix V".

In the foregoing implementation, the second result O" of performing calculation on the first matrix, the third submatrix K", and the fourth submatrix V" may be calculated based on the self-attention mechanism.

In an implementation, the first intermediate result S and the second intermediate result P are stored in the static random access memory SRAM in the computing core.

In the foregoing implementation, the first intermediate result S and the second intermediate result P are stored in the static random access memory SRAM in the computing core, so that the computing core can quickly read the first intermediate result S and the second intermediate result P to perform a subsequent step.

In an implementation, the method further includes:

before determining the second intermediate result P, reading S from the SRAM; and
before determining the second result O", reading P from the SRAM.

According to a second aspect, a chip is provided. The chip includes a computing core. The computing core includes: a self-attention computing unit, configured to determine a first result O' of performing calculation on a first matrix, a first submatrix K', and a second submatrix V' based on a self-attention (self-attention) mechanism, where the first matrix is a submatrix of a query (query) matrix Q or the first matrix is the query matrix Q, the first submatrix K' is a submatrix of a key (key) matrix K, the second submatrix V' is a submatrix of a value (value) matrix V, $Q,K,V \in \mathbb{R}^{N \times d}$, $K',V' \in \mathbb{R}^{y_1 \times d}$, $y_1$, N, and d are positive integers, x≤N, and $y_1 <$ N, where the self-attention computing unit is further configured to determine a second result O" of performing calculation on the first matrix, a third submatrix K", and a fourth submatrix V' based on the self-attention mechanism, where the third submatrix K" is a submatrix of the matrix K other than the first submatrix K', the fourth submatrix V" is a submatrix of the matrix V other than the second submatrix V', $K",V" \in \mathbb{R}^{y_2 \times d}$, $y_2$ is a positive integer less than N-$y_1$, and $Q" \in \mathbb{R}^{x \times d}$; and a fusion unit, configured to determine a third result based on at least the first result O' and the second result O", where the third result is a matrix O obtained by performing calculation on the matrix Q, the matrix K, and the matrix V based on the self-attention mechanism, or a submatrix of the matrix O, and $O \in \mathbb{R}^{N \times d}$.

In an implementation, the first matrix is the query (query) matrix Q, and the third result is the matrix O obtained by performing calculation on the matrix Q, the matrix K, and the matrix V based on the self-attention mechanism.

In an implementation, the first matrix is a submatrix Q' of the matrix Q, $Q' \in \mathbb{R}^{x \times d}$, x is a positive integer less than N, the third result is a submatrix O" of the matrix O obtained by performing calculation on the matrix Q, the matrix K, and the matrix V based on the self-attention mechanism, $O''' \in \mathbb{R}^{x \times d}$, and the method further includes: obtaining the matrix O based on at least the third result.

In an implementation, the computing core further includes: a division unit, configured to determine a value of x, a value of $y_1$, and/or a value of $y_2$ based on an SRAM capacity of the computing core.

In an implementation, that the self-attention computing unit is further configured to determine the second result O" of performing calculation on the first matrix, the third submatrix K", and the fourth submatrix V" based on the self-attention mechanism includes: The self-attention computing unit is further configured to determine a first intermediate result S based on the first matrix and the third submatrix K", where the first intermediate result S is a result of performing matrix multiplication on the first matrix and a transposed matrix $K"^T$ of the third submatrix K". The self-attention computing unit is further configured to determine a second intermediate result P based on the first intermediate result S, where the second intermediate result P is a result of normalizing the first intermediate result S. The self-attention computing unit is further configured to determine the second result O" based on the second intermediate result P and the fourth submatrix V", where the second result O" is a result of performing matrix multiplication on the second intermediate result P and the fourth submatrix V".

In an implementation, the first intermediate result S and the second intermediate result P are stored in a static random access memory SRAM in the computing core.

According to a third aspect, a chip is provided, and includes a computing core. The computing core includes a memory and a processor. The memory is configured to store computer instructions. The processor is configured to invoke the computer instructions from the memory and run the computer instructions, to implement the method provided in any one of the first aspect or the implementations of the first aspect.

According to a fourth aspect, a data processing system is provided, and includes a chip and a control apparatus. The chip includes a plurality of computing cores. The control apparatus is configured to obtain a computing task, where the computing task indicates to perform calculation on task data based on a self-attention (self-attention) mechanism, and the task data includes a query (query) matrix, a key (key) matrix, and a value (value) matrix that correspond to each of h head (head) dimensions, in multi-head self-attention (multi-head self-attention), that correspond to training data of each of B batch (batch) dimensions. The control apparatus is further configured to divide the computing task into a plurality of subtasks, where a query matrix, a key matrix, and a value matrix that correspond to a same head dimension of training data of a same batch dimension are grouped into task data of a same subtask, and each subtask indicates to perform calculation on task data in the subtask based on the self-attention mechanism. The control apparatus is further configured to separately send the plurality of subtasks to different computing cores in the chip. After receiving a subtask from the control apparatus, each computing core in the chip performs the method provided in any one of the first aspect or the implementations of the first aspect.

According to a fifth aspect, a computer-readable storage medium is provided. The storage medium stores a computer program. When the computer program is executed by a chip, the chip performs the method provided in any one of the first aspect or the implementations of the first aspect.

According to a sixth aspect, a computer program product is provided. The computer program product includes instructions. When the instructions are run on a chip, the chip performs the method provided in any one of the first aspect or the implementations of the first aspect.

## BRIEF DESCRIPTION OF DRAWINGS

FIG. 1 is a diagram 1 of an operation process of a self-attention (self-attention) mechanism according to an embodiment of this application;

FIG. 2A and FIG. 2B are a diagram of a structure of a transformer model according to an embodiment of this application;

FIG. 3 is a diagram of access rates and capacities of different memories according to an embodiment of this application;

FIG. 4 is a diagram 2 of an operation process of a self-attention (self-attention) mechanism according to an embodiment of this application;

FIG. 5 is a diagram 3 of an operation process of a self-attention (self-attention) mechanism according to an embodiment of this application;

FIG. 6 is a diagram of dividing a matrix Q, a matrix K, and a matrix V into submatrices according to an embodiment of this application;

FIG. 7A, FIG. 7B, and FIG. 7C are a diagram 4 of an operation process of a self-attention (self-attention) mechanism according to an embodiment of this application;

FIG. 8 is a diagram 5 of an operation process of a self-attention (self-attention) mechanism according to an embodiment of this application;

FIG. 9 is a diagram 6 of an operation process of a self-attention (self-attention) mechanism according to an embodiment of this application;

FIG. 10 is a diagram 7 of an operation process of a self-attention (self-attention) mechanism according to an embodiment of this application;

FIG. 11 is a diagram of parallel processing of a plurality of operation flows according to an embodiment of this application;

FIG. 12 is a diagram 8 of an operation process of a self-attention (self-attention) mechanism according to an embodiment of this application;

FIG. 13 is a diagram 9 of an operation process of a self-attention (self-attention) mechanism according to an embodiment of this application;

FIG. 14 is a diagram of dividing task data according to an embodiment of this application;

FIG. 15 is a schematic flowchart of a data processing method according to an embodiment of this application;

FIG. 16 is a diagram 1 of a structure of a chip according to an embodiment of this application;

FIG. 17 is a diagram 2 of a structure of a chip according to an embodiment of this application; and

FIG. 18 is a diagram of a structure of a data processing system according to an embodiment of this application.

## DESCRIPTION OF EMBODIMENTS

The following describes the technical solutions in embodiments of this application with reference to the accompanying drawings in embodiments of this application.

For ease of understanding the embodiments, related technologies in the technical solutions provided in the embodiments are first described.

1. Self-attention (self-attention) mechanism

The self-attention mechanism is a common mechanism in a machine learning model. In the self-attention mechanism, sequence data may be processed, so that a model can focus on a relationship between sequence elements in the sequence data, to capture a dependency relationship between the sequence elements.

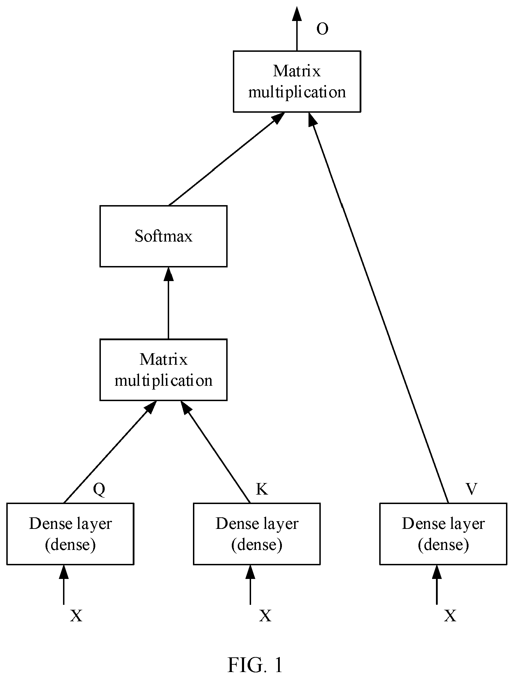

Specifically, in the self-attention mechanism, for a sequence X with a length of N (to be specific, the sequence X includes N elements), as shown in FIG. 1, a query (query) matrix Q, a key (key) matrix K, and a value (value) matrix V that correspond to the sequence X may be obtained through a corresponding dense (dense) layer. The matrix Q, the matrix K, and the matrix V each are a matrix with N rows and d columns, that is, $Q, K, V \in \mathbb{R}^{N \times d}$, where N is a quantity of elements in the sequence, and d is a vector dimension of an embedding (embedding).

Then three steps are performed: performing matrix multiplication on the matrix Q and a transposed matrix $K^T$ of the matrix K to obtain a matrix S, normalizing the matrix S by using a softmax function to obtain a matrix P, and performing matrix multiplication on the matrix P and the matrix V to obtain a matrix O (where $O \in \mathbb{R}^{N \times d}$), to obtain a calculation result (namely, the matrix O) of the self-attention mechanism.

For example, the calculation result (the matrix O) of the self-attention mechanism may be obtained by using the following formula (1):

$$O = \mathrm{softmax}\left(\frac{QK^T}{\sqrt{d}}\right)V \qquad\qquad \text{Formula (1)}$$

$QK^T$ is the matrix S obtained by performing matrix multiplication on the matrix Q and the transposed matrix $K^T$ of the matrix K, $\mathrm{softmax}\left(\frac{QK^T}{\sqrt{d}}\right)$ is the matrix P obtained by normalizing the matrix S, and $\mathrm{softmax}\left(\frac{QK^T}{\sqrt{d}}\right)V$ is the matrix O obtained by performing matrix multiplication on the matrix P and the matrix V.

In addition, in the formula (1), to decouple the calculation result from the vector dimension d of the embedding, $\sqrt{d}$ is used in the formula (1) to implement normalization. It can be understood that, during actual application, $QK^T$ may alternatively not be normalized by using $\sqrt{d}$. In other words, during actual application, the calculation result (namely, the matrix O) of the self-attention mechanism may alternatively be obtained by using the following formula (2):

$$O = \mathrm{softmax}(QK^T)V \qquad\qquad \text{Formula (2)}$$

In addition, in a multi-head self-attention (multi-head self-attention) mechanism, a result of a self-attention mechanism may be calculated for each head (head) based on the foregoing content of the formula (1) or the formula (2), and then a result of the multi-head self-attention mechanism is obtained based on the result of the self-attention mechanism corresponding to each head.

For example, in the multi-head self-attention mechanism, a query tensor Q, a key tensor K, and a value tensor V that correspond to the sequence X satisfy: $Q, K, V \in \mathbb{R}^{h \times N \times d}$, where h is a quantity of heads, N is a quantity of elements in the sequence, and d is a vector dimension of an embedding. Then the result (referred to as a tensor O) of the self-attention mechanism of each head may be obtained by using the formula (1) or the formula (2), to obtain the result of the multi-head self-attention mechanism.

In addition, when training data includes sequences of a plurality of batches (batch), a result of a self-attention mechanism may be calculated for each batch based on the foregoing content of the formula (1) or the formula (2).

For example, when the training data includes sequences of B batches, in the multi-head self-attention mechanism, a query tensor Q, a key tensor K, and a value tensor V that correspond to a sequence in the training data satisfy: $Q, K, V \in \mathbb{R}^{B \times h \times N \times d}$, where B is sequence batches, h is a quantity of heads, N is a quantity of elements in a sequence of each batch, and d is a vector dimension of an embedding. Then the result (referred to as a tensor O) of the self-attention mechanism of each head may be obtained by using the formula (1) or the formula (2), to obtain the result of the multi-head self-attention mechanism.

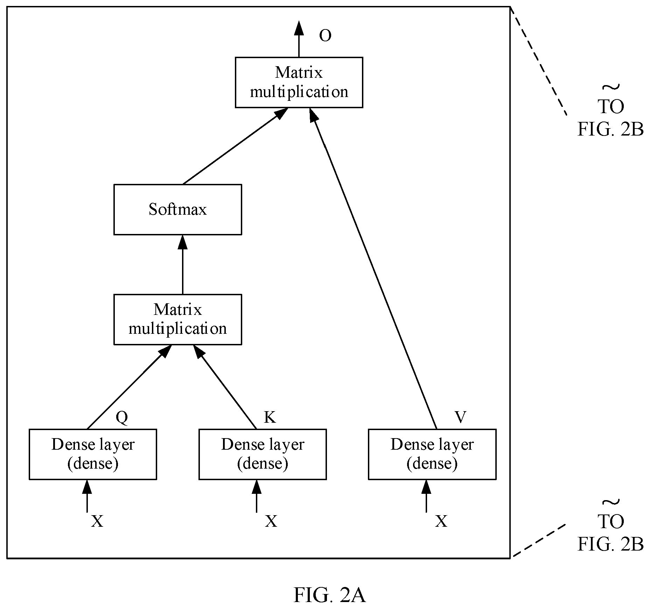

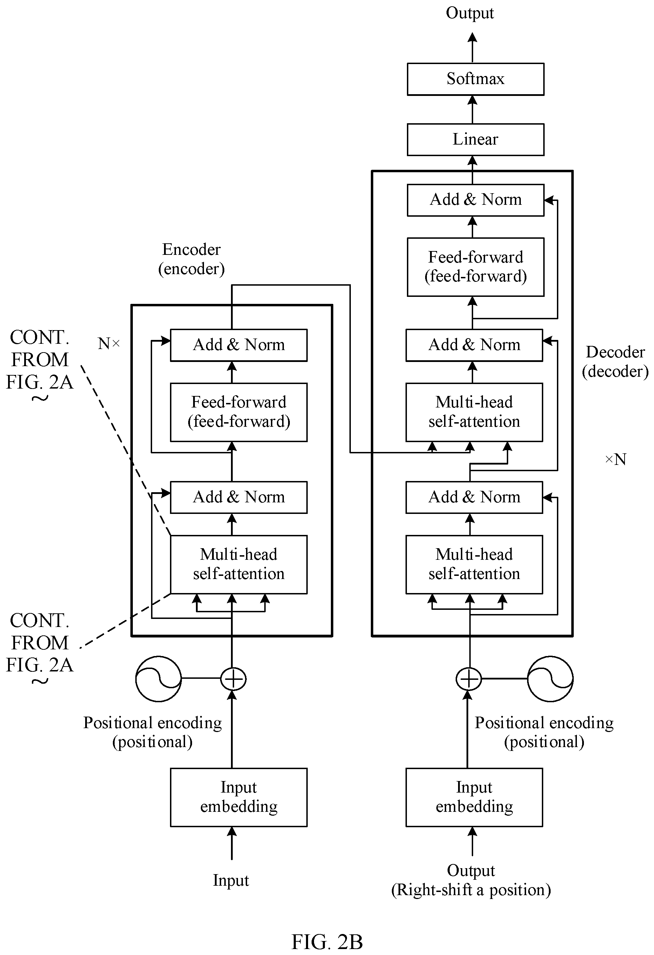

The self-attention mechanism is commonly used in a transformer (transformer) model. For example, FIG. 2A and FIG. 2B are a diagram of a structure of a transformer model. The model may include N encoders (encoder) of a same structure and N decoders (decoder) of a same structure. One encoder includes two sublayers: multi-head self-attention and feed-forward (feed-forward). One decoder includes three sublayers: multi-head self-attention, encoder-decoder attention (encoder-decoder attention), and feed-forward. Specifically, at the multi-head self-attention sublayers of the encoder and the decoder, calculation may be performed based on the foregoing content of the formula (1) or the formula (2).

2. Intelligent chip

In the post-Moore era, although transistor density of a chip continues to increase, it is difficult to further improve power density and performance density. This means that computing power cannot be improved through process improvement. Therefore, an important branch of chip development is a domain-specific architecture (domain-specific architecture), also referred to as an intelligent chip. For example, the intelligent chip includes various graphics processing units (graphics processing unit, GPU), tensor processing units (neural processing unit, NPU), and neural-network processing units (neural processing unit, NPU).

Compared with a general-purpose chip, for example, a central processing unit (central processing unit, CPU), the intelligent chip has the following characteristics: high specialization, simple design, support for customizing an operation unit based on specific characteristics of an application, simplified control logic, support for designing a storage structure and a data path that adapt to a computing feature in a specific field, and the like. Although universality and flexibility are compromised in the intelligent chip, the intelligent chip achieves higher performance and a higher energy efficiency ratio, and has been widely used in the fields of high-performance computing, artificial intelligence, cryptography, and the like.

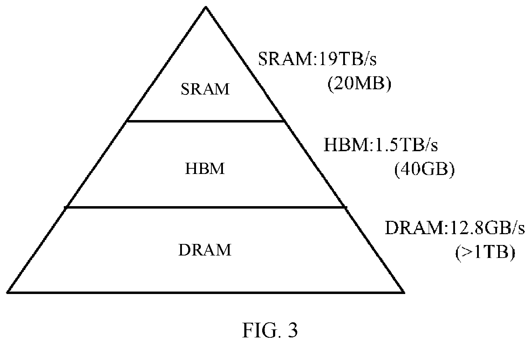

A storage architecture of the intelligent chip may be divided into a plurality of layers. A storage closer to a computing core (Core) of the intelligent chip has a smaller capacity and a higher read/write rate. On the contrary, a storage farther away from the computing core of the intelligent chip has a larger capacity and a lower read/write rate. For example, as shown in FIG. 3, a capacity of a static random access memory (static random access memory, SRAM) closest to the computing core may be at an MB level (for example, 20 MB in the figure), and an access rate of the SRAM may be at a 10 TB/s level (for example, 19 TB/s in the figure); a capacity of a high-bandwidth memory (high-bandwidth memory, HBM) farther away from the computing core than the SRAM may be at a GB level (for example, 40 GB in the figure), and an access rate of the HBM may be at a 1 TB/s level (for example, 1.5 TB/s in the figure); and a capacity of a dynamic random access memory (dynamic random access memory, DRAM) farther away from the computing core than the SRAM and the HBM may be at a TB level (for example, > 1 TB in the figure), and an access rate of the DRAM may be at a 10 GB/s level (or example, 12.8 GB/s in the figure).

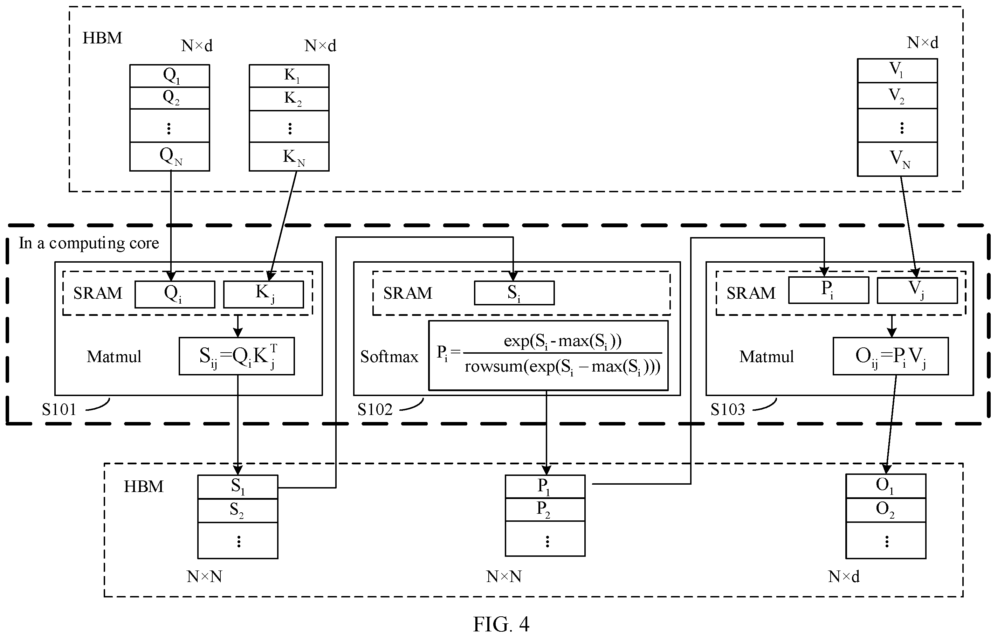

The following describes a calculation process of a self-attention mechanism in the related technology with reference to an example. For example, calculation is performed, based on the self-attention mechanism, on a query matrix Q, a key matrix K, and a value matrix V (where $Q, K, V \in \mathbb{R}^{N \times d}$) that correspond to a sequence X. As shown in FIG. 4, a calculation process includes the following content of S101 to S103.

S101: A computing core in a chip reads a matrix Q and a matrix K from an HBM, and performs matrix multiplication on the matrix Q and a transposed matrix $K^T$ of the matrix K to obtain a matrix S.

Specifically, in the computing core, a dot product operation is performed on an $i^{th}$ row (namely, $Q_i$) of the matrix Q and a $j^{th}$ row (namely, $K_i$) of the matrix K, to obtain each element $S_{ij}$ in the matrix S. Results of dot product operations between a $1^{st}$ row of the matrix Q and all rows of the matrix K form a $1^{st}$ row (namely, $S_1$) of the matrix S, results of dot product operations between a $2^{nd}$ row of the matrix Q and all the rows of the matrix K form a $2^{nd}$ row (namely, $S_2$) of the matrix S, and so on. The matrix S includes N rows and N columns, that is, $S \in \mathbb{R}^{N \times N}$.

Because an SRAM capacity of the computing core is limited, after calculating the matrix S, the computing core writes the matrix S into the HBM, to perform a next operation.

S102: The computing core reads the matrix S from the HBM, and normalizes the matrix S.

Specifically, in the computing core, an $i^{th}$ row (namely, $S_i$) of the matrix S is sequentially read from the HBM. Then an $i^{th}$ row (namely, $P_i$) of a matrix P in a normalization result is obtained according to the following formula (3):

$$P_i = \frac{\exp(S_i - \max(S_i))}{\mathrm{rowsum}(\exp(S_i - \max(S_i)))} \qquad \text{Formula (3)}$$

The matrix P includes N rows and N columns, that is, $P \in \mathbb{R}^{N \times N}$.

After calculating the matrix P, the computing core writes the matrix P into the HBM, to perform a next operation.

S103: The computing core reads the matrix P and the matrix V from the HBM, and performs matrix multiplication on the matrix P and the matrix V to obtain a result (namely, a matrix O) of a self-attention mechanism.

Specifically, in the computing core, a dot product operation is performed on an $i^{th}$ row (namely, $P_i$) of the matrix P and a $j^{th}$ row (namely, $V_i$) of the matrix V, to obtain each element $O_{ij}$ in the matrix O. Results of dot product operations between a $1^{st}$ row of the matrix P and all rows of the matrix V form a $1^{st}$ row (namely, $O_1$) of the matrix O, results of dot product operations between a $2^{nd}$ row of the matrix P and all the rows of the matrix V form a $2^{nd}$ row (namely, $O_2$) of the matrix O, and so on. The matrix O includes N rows and d columns, that is, $O \in \mathbb{R}^{N \times d}$.

It can be learned that, in the related technology shown in FIG. 4, a large amount of data is generated and needs to be stored during calculation. For example, after the N×N matrix S is obtained through calculation in S101, the matrix S needs to be stored for performing a subsequent operation. For another example, after the N×N matrix P is obtained through calculation in S102, the matrix P needs to be stored for performing a subsequent operation. Especially, as a sequence length of training data continuously increases (to be specific, a value of N continuously increases), an amount of data generated during calculation increases quadratically. In addition, because the SRAM capacity is limited, in the foregoing related technology, data generated during calculation usually needs to be stored in the HBM. For example, in S101, the matrix S is stored in the HBM; and in S102, the matrix P is stored in the HBM.

Consequently, the HBM needs to be frequently accessed during calculation. For example, in the process of S101, the computing core needs to read the matrix Q and the matrix K from the HBM and store the matrix S in the HBM, in other words, complexity of accessing the HBM by the computing core in S101 is $O(Nd + N^2)$; in the process of S102, the computing core needs to read the matrix S from the HBM and store the matrix P in the HBM, in other words, complexity of accessing the HBM by the computing core in S102 is $O(N^2)$; and in the process of S103, the computing core needs to read the matrix P from the HBM and store the matrix O in the HBM, in other words, complexity of accessing the HBM by the computing core in S103 is $O(Nd + N^2)$. In view of the foregoing problem, the following is considered in embodiments of this application: When calculation is performed, based on the self-attention mechanism, on the query matrix Q, the key matrix K, and the value matrix V that correspond to the sequence X, the matrix Q, the matrix K, and the matrix V may be divided into submatrices with a smaller data amount.

Embodiment 1:

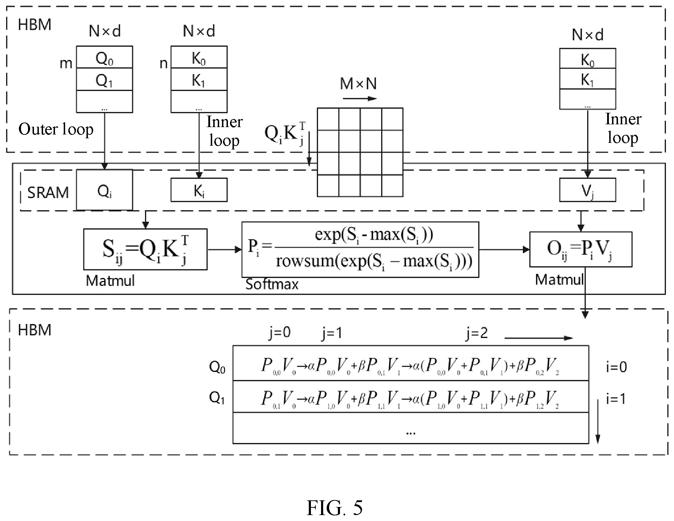

Because an on-chip SRAM memory is limited, in this embodiment of this application, input data needs to be split, and a computing task in an AI core is further split into finer-grained subtasks for orchestration. As shown in FIG. 5, in this embodiment of this application, $Q, K, V \in \mathbb{R}^{N \times d}$ in the AI core is split into finer-grained $Q_i \in \mathbb{R}^{m \times d}\left(i = 0, \dots, \frac{N}{m}\right)$, $K_i \in \mathbb{R}^{n \times d}\left(i = 0, \dots, \frac{N}{n}\right)$, and $V_i \in \mathbb{R}^{n \times d}\left(i = 0, \dots, \frac{N}{n}\right)$. The hyperparameters m and n herein need to satisfy $(m \times d + 2 \times n \times d) \times 2 \leq M$, where M is a capacity size (unit: B) of the SRAM, and it is assumed that an input data type is FLOAT16.

As shown in FIG. 5, in this embodiment of this application, the fine-grained subtask data $Q_i \in \mathbb{R}^{m \times d}\left(i = 0, \dots, \frac{N}{m}\right)$, $K_i \in \mathbb{R}^{n \times d}\left(i = 0, \dots, \frac{N}{n}\right)$, and

$V_i \in \mathbb{R}^{n \times d}\left(i = 0, \ldots, \frac{N}{n}\right)$ is read into an on-chip SRAM memory of an intelligent chip, and calculation in the following three steps is sequentially completed:

Step 1: $S_{ij} = Q_i K_j^T \in \mathbb{R}^{m \times n}$

Step 2: $P_{ij} = \text{softmax}(S_{ij}) \in \mathbb{R}^{m \times n}$

Step 3: $O_{ij} = P_{ij} V_j$

In step 1, matrix multiplication is performed on $Q_i$ and $K_j^T$. A physical meaning of a calculation result $S_{ij}$ is a weight of a correlation between a query and a key. In step 2, softmax (softmax is a common mathematical method for weight normalization) is performed on $S_{ij}$ to calculate a weight normalization result $P_{ij}$. In step 3, matrix multiplication is performed on $P_{ij}$ and $V_j$, and a result $O_{ij}$ of an attention mechanism is obtained through weighted summation of a weight and a value. Because $S_{ij}$ is a part of data of a full intermediate result $S=QK^T$, to ensure mathematical equivalence between a calculation result and a calculation performed before fusion, weighted accumulation needs to be performed on the calculation results in the foregoing three steps in each cycle to obtain a final calculation result O.

Subtask orchestration: During fusion calculation, weighted accumulation needs to be performed on an intermediate calculation result $O_i \in \mathbb{R}^{m \times d}\left(i = 0, \ldots, \frac{N}{m}\right)$ in each cycle. This means that old $O_i$ needs to be read from an HBM onto a chip, then weighted accumulation is performed on new $O_i$ and old $O_i$, and then a result is written back to the HBM. Therefore, an additional cost resulting from the fusion calculation is frequent I/O access to the calculation result O in the HMB. To reduce frequent reading and writing of the calculation result O, in this embodiment of this application, subtask orchestration with two layers of loops is performed on a fine-grained subtask: (1) Outer loop: In the outer loop, $Q_i \in \mathbb{R}^{m \times d}\left(i = 0, \ldots, \frac{N}{m}\right)$ is sequentially read in this embodiment of this application. (2) Inner loop: In the inner loop, $K_i \in \mathbb{R}^{n \times d}\left(i = 0, \ldots, \frac{N}{n}\right)$ and $V_i \in \mathbb{R}^{n \times d}\left(i = 0, \ldots, \frac{N}{n}\right)$ are sequentially read in this embodiment of this application. Based on the orchestration, during calculation of the subtask, weighted accumulation is performed on $O_i$ to obtain a correct result, and then $O_{i+1}$ is calculated. The weight parameters $\alpha$ and $\beta$ herein are dynamic variables. A method for updating the weight parameters is as follows:

$$m_{ij} = rowmax(S_{ij})$$

$$l_{ij} = rowsum(P_{ij})$$

$$m_i^{new} = \max(m_i^{old}, m_{ij})$$

$$l_i^{new} = e^{m_i^{old} - m_i^{new}} l_i^{old} + e^{m_{ij} - m_i^{new}} l_{ij}$$

$$\alpha = diag(l_i^{new})^{-1}(diag(l_i^{old})e^{m_i^{old} - m_i^{new}})$$

$$\beta = diag(l_i^{new})^{-1}(e^{m_{ij} - m_i^{new}})$$

$$l_i^{old} \leftarrow l_i^{new}$$

$$m_i^{new} \leftarrow m_i^{old}$$

It should be noted that, as shown in FIG. 5, in this embodiment of this application, an intermediate result of $O_i$ is not written into the HBM but is cached in the on-chip SRAM, and $O_i$ is written back into the HBM after a correct calculation result is obtained after one outer loop ends. In addition, in this embodiment of this application, the input data is pre-read by using an on-chip L2 cache, to eliminate overheads of reading data from the HBM, and reduce intra-core computing time.

Embodiment 2:

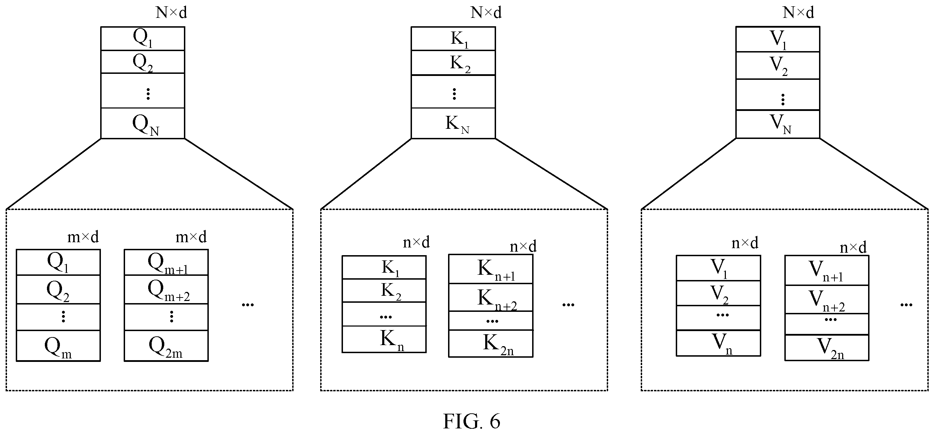

For example, as shown in FIG. 6, every m rows of an N×d matrix Q are grouped into one submatrix, and therefore the matrix Q may be divided into $\dfrac{N}{m}$ submatrices (as shown in FIG. 6, the $\dfrac{N}{m}$ submatrices may include

$$\begin{bmatrix} Q_1 \\ Q_2 \\ \cdots \\ Q_m \end{bmatrix}, \begin{bmatrix} Q_{m+1} \\ Q_{m+2} \\ \cdots \\ Q_{2m} \end{bmatrix}$$

, and the like), where a size of each submatrix is m×d. In addition, every n rows of an N×d matrix K are grouped into one submatrix, and therefore the matrix K may be divided into $\dfrac{N}{n}$ submatrices (as shown in FIG. 6, the $\dfrac{N}{n}$ submatrices may include

$$\begin{bmatrix} K_1 \\ K_2 \\ \cdots \\ K_n \end{bmatrix}, \begin{bmatrix} K_{n+1} \\ K_{n+2} \\ \cdots \\ K_{2n} \end{bmatrix}$$

, and the like), where a size of each submatrix is n×d. Moreover, every n rows of an N×d matrix V are grouped into one submatrix, and therefore the matrix V may be divided into $\dfrac{N}{n}$ submatrices

(as shown in FIG. 6, the $\dfrac{N}{n}$ submatrices may include

$$\begin{bmatrix} V_1 \\ V_2 \\ \cdots \\ V_n \end{bmatrix}, \begin{bmatrix} V_{n+1} \\ V_{n+2} \\ \cdots \\ V_{2n} \end{bmatrix}$$

, and the like), where a size of each submatrix is n×d.

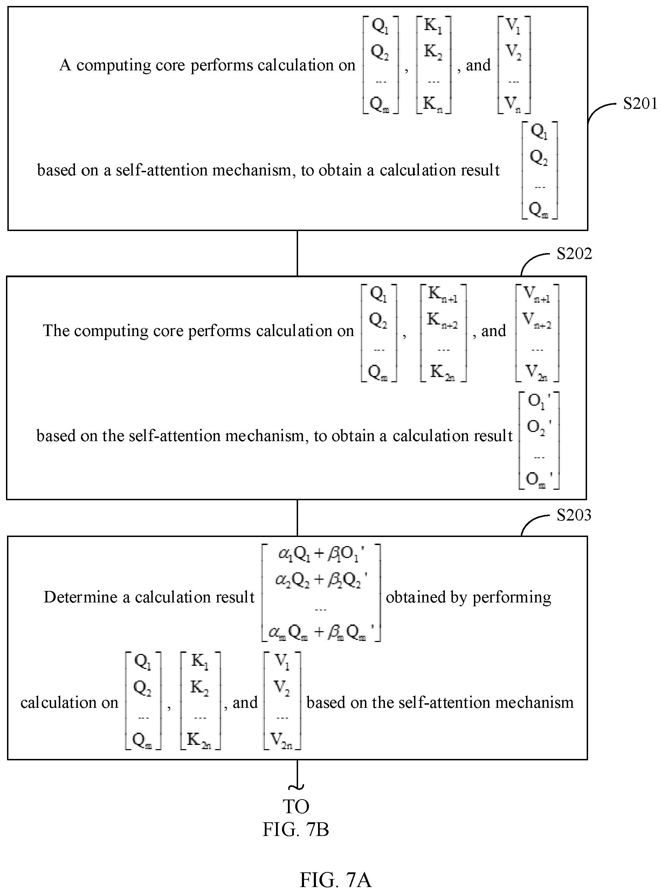

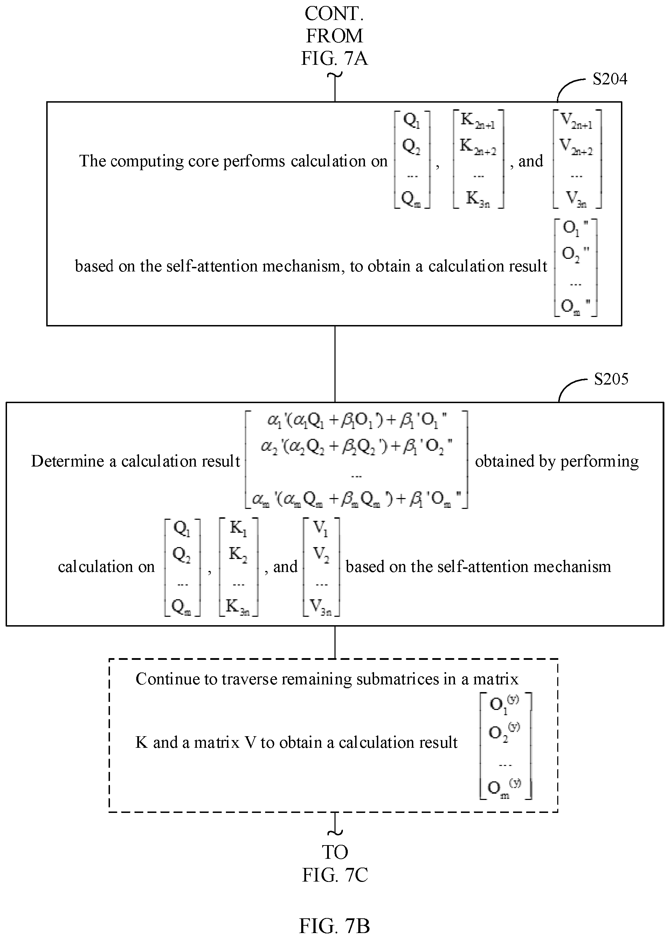

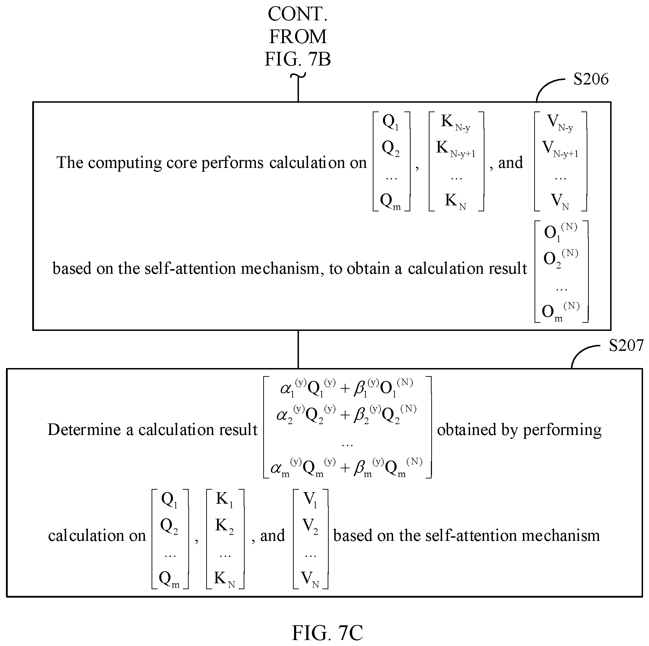

After the matrix Q, the matrix K, and the matrix V are divided into submatrices, a calculation result (namely, a matrix O) obtained by performing calculation on the matrix Q, the matrix K, and the matrix V based on a self-attention mechanism may be obtained by using the submatrices. The following describes a running process of a computing core in this embodiment of this application by using a process of calculating a calculation result corresponding to the first m sequence elements in the matrix O (that is, a process of calculating the first m rows in the matrix O) as an example. Specifically, as shown in FIG. 7A, FIG. 7B, and FIG. 7C, the running process of the computing core may include the following steps.

S201: The computing core performs calculation on $\begin{bmatrix} Q_1 \\ Q_2 \\ \cdots \\ Q_m \end{bmatrix}, \begin{bmatrix} K_1 \\ K_2 \\ \cdots \\ K_n \end{bmatrix}$, and $\begin{bmatrix} V_1 \\ V_2 \\ \cdots \\ V_n \end{bmatrix}$ based on the self-attention mechanism, to obtain a calculation result $\begin{bmatrix} O_1 \\ O_2 \\ \cdots \\ O_m \end{bmatrix}$. $\begin{bmatrix} Q_1 \\ Q_2 \\ \cdots \\ Q_m \end{bmatrix}$ is a submatrix corresponding to the first m sequence elements in the matrix Q, and $\begin{bmatrix} Q_1 \\ Q_2 \\ \cdots \\ Q_m \end{bmatrix} \in \mathbb{R}^{m \times d}$ . $\begin{bmatrix} K_1 \\ K_2 \\ \cdots \\ K_n \end{bmatrix}$ is a submatrix corresponding to the first n sequence elements in the

matrix K, and $\begin{bmatrix} K_1 \\ K_2 \\ \cdots \\ K_n \end{bmatrix} \in \mathbb{R}^{n \times d}$ . $\begin{bmatrix} V_1 \\ V_2 \\ \cdots \\ V_n \end{bmatrix}$ is a submatrix corresponding to the first n sequence elements in the matrix V,

and $\begin{bmatrix} V_1 \\ V_2 \\ \cdots \\ V_n \end{bmatrix} \in \mathbb{R}^{n \times d}$ . In addition, $\begin{bmatrix} O_1 \\ O_2 \\ \cdots \\ O_m \end{bmatrix} \in \mathbb{R}^{m \times d}$ .

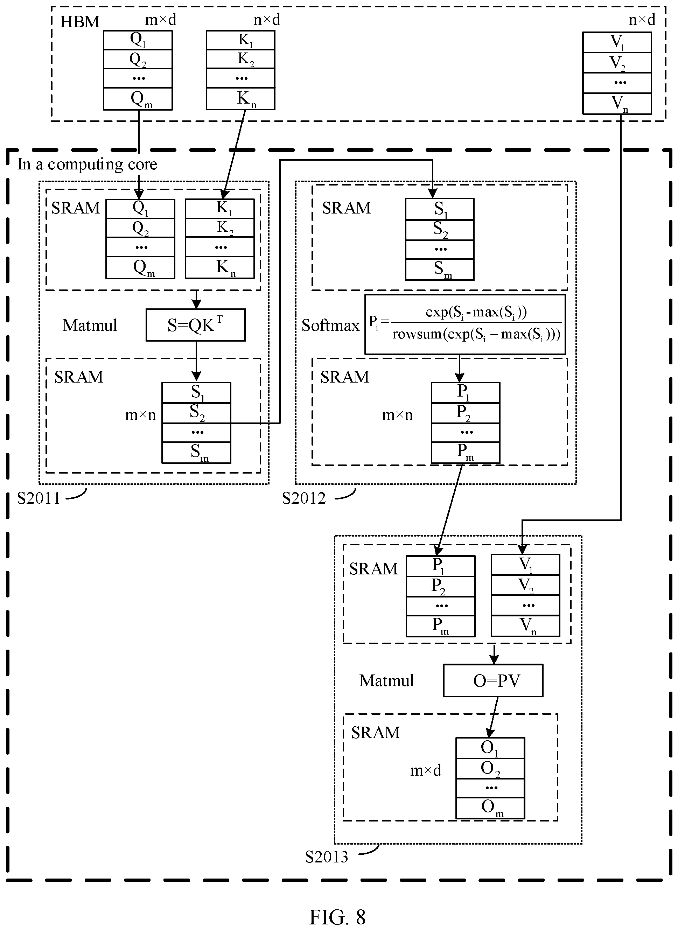

Specifically, as shown in FIG. 8, S201 may include the following content of S2011 to S2013.

S2011: The computing core calculates a matrix multiplication result $\begin{bmatrix} S_1 \\ S_2 \\ \cdots \\ S_m \end{bmatrix}$ of $\begin{bmatrix} Q_1 \\ Q_2 \\ \cdots \\ Q_m \end{bmatrix}$ and

$\begin{bmatrix} K_1 \\ K_2 \\ \cdots \\ K_n \end{bmatrix}^T \cdot \begin{bmatrix} S_1 \\ S_2 \\ \cdots \\ S_m \end{bmatrix} \in \mathbb{R}^{m \times n}$ . To be specific, $\begin{bmatrix} S_1 \\ S_2 \\ \cdots \\ S_m \end{bmatrix}$ is an m×n matrix.

For example, as shown in FIG. 8, the computing core may first read $\begin{bmatrix} Q_1 \\ Q_2 \\ \cdots \\ Q_m \end{bmatrix}$ and $\begin{bmatrix} K_1 \\ K_2 \\ \cdots \\ K_n \end{bmatrix}$ from an HBM, and then calculate a matrix multiplication result $\begin{bmatrix} S_1 \\ S_2 \\ \cdots \\ S_m \end{bmatrix}$ of $\begin{bmatrix} Q_1 \\ Q_2 \\ \cdots \\ Q_m \end{bmatrix}$ and $\begin{bmatrix} K_1 \\ K_2 \\ \cdots \\ K_n \end{bmatrix}^T$ by using a matmul function. Because a data amount (m×n) of $\begin{bmatrix} S_1 \\ S_2 \\ \cdots \\ S_m \end{bmatrix}$ is small, $\begin{bmatrix} S_1 \\ S_2 \\ \cdots \\ S_m \end{bmatrix}$ may be stored in an SRAM for subsequent processing.

During actual application, a matrix multiplication-dedicated hardware unit (for example, a Cube unit) in the computing core may alternatively be used to implement content of S2021.

S2012: The computing core normalizes $\begin{bmatrix} S_1 \\ S_2 \\ \cdots \\ S_m \end{bmatrix}$ to obtain $\begin{bmatrix} P_1 \\ P_2 \\ \cdots \\ P_m \end{bmatrix}$. $\begin{bmatrix} P_1 \\ P_2 \\ \cdots \\ P_m \end{bmatrix} \in \mathbb{R}^{m \times n}$. To be specific, $\begin{bmatrix} P_1 \\ P_2 \\ \cdots \\ P_m \end{bmatrix}$ is a matrix with m rows and n columns.

For example, as shown in FIG. 8, the computing core may normalize rows in $\begin{bmatrix} S_1 \\ S_2 \\ \cdots \\ S_m \end{bmatrix}$ by using a softmax function, to obtain $\begin{bmatrix} P_1 \\ P_2 \\ \cdots \\ P_m \end{bmatrix}$. Because a data amount (m×n) of $\begin{bmatrix} P_1 \\ P_2 \\ \cdots \\ P_m \end{bmatrix}$ is small, $\begin{bmatrix} P_1 \\ P_2 \\ \cdots \\ P_m \end{bmatrix}$ may be stored in the SRAM for subsequent processing.

During actual application, a vector computing hardware unit (for example, a Vector unit) in the computing core may alternatively be used to implement content of S2022.

S2013: The computing core calculates a matrix multiplication result $\begin{bmatrix} O_1 \\ O_2 \\ \cdots \\ O_m \end{bmatrix}$ of $\begin{bmatrix} P_1 \\ P_2 \\ \cdots \\ P_m \end{bmatrix}$ and $\begin{bmatrix} V_1 \\ V_2 \\ \cdots \\ V_n \end{bmatrix}$.

For example, as shown in FIG. 8, the computing core may calculate a matrix multiplication result $\begin{bmatrix} O_1 \\ O_2 \\ \cdots \\ O_m \end{bmatrix}$ of $\begin{bmatrix} P_1 \\ P_2 \\ \cdots \\ P_m \end{bmatrix}$ and $\begin{bmatrix} V_1 \\ V_2 \\ \cdots \\ V_n \end{bmatrix}$ by using the matmul function. Because a data amount (m×d) of $\begin{bmatrix} O_1 \\ O_2 \\ \cdots \\ O_m \end{bmatrix}$ is small, $\begin{bmatrix} O_1 \\ O_2 \\ \cdots \\ O_m \end{bmatrix}$ may be stored in the SRAM for subsequent processing.

During actual application, the matrix multiplication-dedicated hardware unit (for example, the Cube unit) in the computing core may be used to implement content of S2023.

S202: The computing core performs calculation on $\begin{bmatrix} Q_1 \\ Q_2 \\ \cdots \\ Q_m \end{bmatrix}$, $\begin{bmatrix} K_{n+1} \\ K_{n+2} \\ \cdots \\ K_{2n} \end{bmatrix}$, and $\begin{bmatrix} V_{n+1} \\ V_{n+2} \\ \cdots \\ V_{2n} \end{bmatrix}$ based on the self-attention mechanism, to obtain a calculation result $\begin{bmatrix} O_1' \\ O_2' \\ \cdots \\ O_m' \end{bmatrix}$. $\begin{bmatrix} Q_1 \\ Q_2 \\ \cdots \\ Q_m \end{bmatrix}$ is a submatrix corresponding to the first m sequence elements in the matrix Q, and $\begin{bmatrix} Q_1 \\ Q_2 \\ \cdots \\ Q_m \end{bmatrix} \in \mathbb{R}^{m \times d}$. $\begin{bmatrix} K_{n+1} \\ K_{n+2} \\ \cdots \\ K_{2n} \end{bmatrix}$ is a submatrix corresponding to an (n+1)th to a (2n)th

sequence elements in the matrix K, and $\begin{bmatrix} K_{n+1} \\ K_{n+2} \\ \cdots \\ K_{2n} \end{bmatrix} \in \mathbb{R}^{n \times d}$. $\begin{bmatrix} V_{n+1} \\ V_{n+2} \\ \cdots \\ V_{2n} \end{bmatrix}$ is a submatrix corresponding to an (n+1)th to a (2n)th sequence elements in the matrix V, and $\begin{bmatrix} V_{n+1} \\ V_{n+2} \\ \cdots \\ V_{2n} \end{bmatrix} \in \mathbb{R}^{n \times d}$. In addition, $\begin{bmatrix} O_1' \\ O_2' \\ \cdots \\ O_m' \end{bmatrix} \in \mathbb{R}^{m \times d}$.

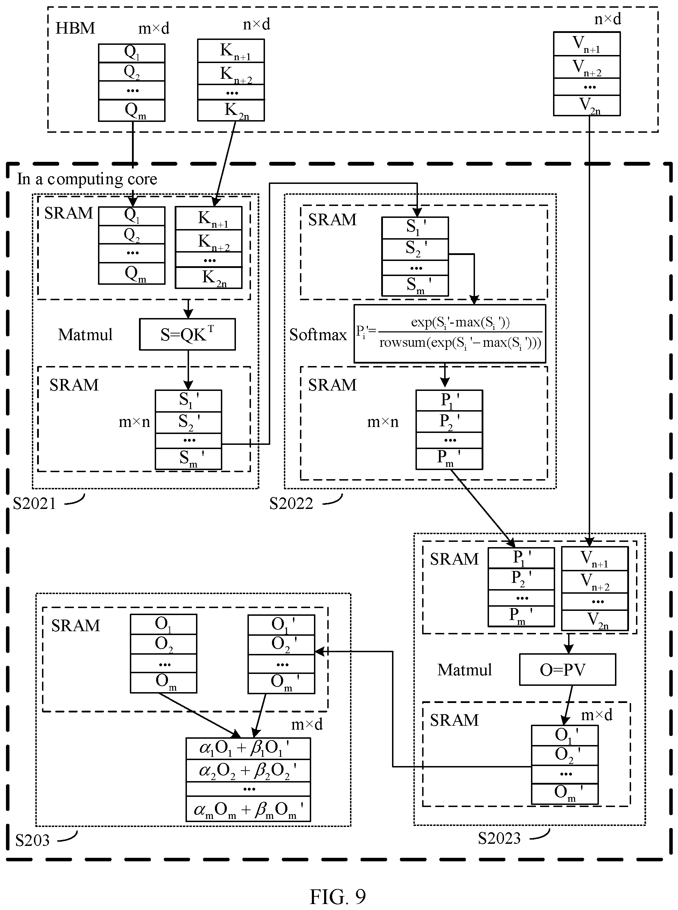

Specifically, as shown in FIG. 9, S202 may include the following content of S2021 to S2023.

S2021: The computing core calculates a matrix multiplication result $\begin{bmatrix} S_1' \\ S_2' \\ \cdots \\ S_m' \end{bmatrix}$ of $\begin{bmatrix} Q_1 \\ Q_2 \\ \cdots \\ Q_m \end{bmatrix}$ and $\begin{bmatrix} K_{n+1} \\ K_{n+2} \\ \cdots \\ K_{2n} \end{bmatrix}^T$.

$\begin{bmatrix} S_1' \\ S_2' \\ \cdots \\ S_m' \end{bmatrix} \in \mathbb{R}^{m \times n}$. To be specific, $\begin{bmatrix} S_1' \\ S_2' \\ \cdots \\ S_m' \end{bmatrix}$ is an m×n matrix.

For a specific implementation process of S2021, refer to the foregoing process of calculating $\begin{bmatrix} S_1 \\ S_2 \\ \cdots \\ S_m \end{bmatrix}$ in S2011. In

addition, similar to $\begin{bmatrix} S_1 \\ S_2 \\ \cdots \\ S_m \end{bmatrix}$, $\begin{bmatrix} S_1' \\ S_2' \\ \cdots \\ S_m' \end{bmatrix}$ may be stored in the SRAM for subsequent processing.

S2022: The computing core normalizes $\begin{bmatrix} S_1' \\ S_2' \\ \cdots \\ S_m' \end{bmatrix}$ to obtain $\begin{bmatrix} P_1' \\ P_2' \\ \cdots \\ P_m' \end{bmatrix}$ . $\begin{bmatrix} P_1' \\ P_2' \\ \cdots \\ P_m' \end{bmatrix} \in \mathbb{R}^{m \times n}$ . To be specific,

$\begin{bmatrix} P_1' \\ P_2' \\ \cdots \\ P_m' \end{bmatrix}$ is a matrix with m rows and n columns.

For a specific implementation process of S2022, refer to the foregoing process of calculating $\begin{bmatrix} P_1 \\ P_2 \\ \cdots \\ P_m \end{bmatrix}$ in S2012. In

addition, $\begin{bmatrix} P_1' \\ P_2' \\ \cdots \\ P_m' \end{bmatrix}$ may be stored in the SRAM for subsequent processing.

S2023: The computing core calculates a matrix multiplication result $\begin{bmatrix} O_1' \\ O_2' \\ \cdots \\ O_m' \end{bmatrix}$ of $\begin{bmatrix} P_1' \\ P_2' \\ \cdots \\ P_m' \end{bmatrix}$ and $\begin{bmatrix} V_{n+1} \\ V_{n+2} \\ \cdots \\ V_{2n} \end{bmatrix}$ .

For a specific implementation process of S2023, refer to the foregoing process of calculating $\begin{bmatrix} O_1 \\ O_2 \\ \cdots \\ O_m \end{bmatrix}$ in S2013. In

addition, $\begin{bmatrix} O_1' \\ O_2' \\ \cdots \\ O_m' \end{bmatrix}$ may be stored in the SRAM for subsequent processing.

S203: The computing core determines, based on $\begin{bmatrix} O_1 \\ O_2 \\ \cdots \\ O_m \end{bmatrix}$ and $\begin{bmatrix} O_1' \\ O_2' \\ \cdots \\ O_m' \end{bmatrix}$ , a calculation result obtained by

performing calculation on $\begin{bmatrix} Q_1 \\ Q_2 \\ \cdots \\ Q_m \end{bmatrix}$, $\begin{bmatrix} K_1 \\ K_2 \\ \cdots \\ K_{2n} \end{bmatrix}$, and $\begin{bmatrix} V_1 \\ V_2 \\ \cdots \\ V_{2n} \end{bmatrix}$ based on the self-attention mechanism.

It can be understood that $\begin{bmatrix} K_1 \\ K_2 \\ \cdots \\ K_{2n} \end{bmatrix}$ is a matrix obtained by splicing $\begin{bmatrix} K_1 \\ K_2 \\ \cdots \\ K_n \end{bmatrix}$ and $\begin{bmatrix} K_{n+1} \\ K_{n+2} \\ \cdots \\ K_{2n} \end{bmatrix}$, and $\begin{bmatrix} V_1 \\ V_2 \\ \cdots \\ V_{2n} \end{bmatrix}$ is a matrix obtained by splicing $\begin{bmatrix} V_1 \\ V_2 \\ \cdots \\ V_n \end{bmatrix}$ and $\begin{bmatrix} V_{n+1} \\ V_{n+2} \\ \cdots \\ V_{2n} \end{bmatrix}$.

For example, parameters $\begin{bmatrix} \alpha_1 \\ \alpha_2 \\ \cdots \\ \alpha_m \end{bmatrix}$ and $\begin{bmatrix} \beta_1 \\ \beta_2 \\ \cdots \\ \beta_m \end{bmatrix}$ may be obtained through calculation based on the following formula set (4), and $\begin{bmatrix} \alpha_1 Q_1 + \beta_1 O_1' \\ \alpha_2 Q_2 + \beta_2 Q_2' \\ \cdots \\ \alpha_m Q_m + \beta_m Q_m' \end{bmatrix}$ is the calculation result obtained by performing calculation on

$\begin{bmatrix} Q_1 \\ Q_2 \\ \cdots \\ Q_m \end{bmatrix}$, $\begin{bmatrix} K_1 \\ K_2 \\ \cdots \\ K_{2n} \end{bmatrix}$, and $\begin{bmatrix} V_1 \\ V_2 \\ \cdots \\ V_{2n} \end{bmatrix}$ based on the self-attention mechanism:

$$M = \text{rowmax}\left(\begin{bmatrix} S_1{}' \\ S_2{}' \\ \cdots \\ S_m{}' \end{bmatrix}\right)$$

$$L = \text{rowsum}\left(\begin{bmatrix} P_1{}' \\ P_2{}' \\ \cdots \\ P_m{}' \end{bmatrix}\right)$$

$$M^{\text{old}} = \text{rowmax}\left(\begin{bmatrix} S_1 \\ S_2 \\ \cdots \\ S_m \end{bmatrix}\right)$$

$$L^{\text{old}} = \text{rowsum}\left(\begin{bmatrix} P_1 \\ P_2 \\ \cdots \\ P_m \end{bmatrix}\right)$$

$$M^{\text{new}} = max(M^{\text{old}} , M))$$

$$L^{\text{new}} = e^{M^{\text{old}} - M^{\text{new}}} \odot L^{\text{old}} + e^{M - M^{\text{new}}} \odot L$$

$$\begin{bmatrix} \alpha_1 \\ \alpha_2 \\ \cdots \\ \alpha_m \end{bmatrix} = \text{diag}(L^{\text{new}})^{-1}(\text{diag}(L^{\text{old}})e^{M^{\text{old}} - M^{\text{new}}})$$

$$\begin{bmatrix} \beta_1 \\ \beta_2 \\ \cdots \\ \beta_m \end{bmatrix} = \text{diag}(L^{\text{new}})^{-1}(e^{M - M^{\text{new}}})$$

Formula set (4)

⊙ represents a row-wise multiplication operation, and diag represents conversion to a diagonal matrix.

S204: The computing core performs calculation on $\begin{bmatrix} Q_1 \\ Q_2 \\ \cdots \\ Q_m \end{bmatrix}$, $\begin{bmatrix} K_{2n+1} \\ K_{2n+2} \\ \cdots \\ K_{3n} \end{bmatrix}$, and $\begin{bmatrix} V_{2n+1} \\ V_{2n+2} \\ \cdots \\ V_{3n} \end{bmatrix}$ based on the self-attention mechanism, to obtain a calculation result $\begin{bmatrix} O_1{}'' \\ O_2{}'' \\ \cdots \\ O_m{}'' \end{bmatrix}$. $\begin{bmatrix} Q_1 \\ Q_2 \\ \cdots \\ Q_m \end{bmatrix}$ is a submatrix corresponding to the first m sequence elements in the matrix Q, and $\begin{bmatrix} Q_1 \\ Q_2 \\ \cdots \\ Q_m \end{bmatrix} \in \mathbb{R}^{m \times d}$. $\begin{bmatrix} K_{2n+1} \\ K_{2n+2} \\ \cdots \\ K_{3n} \end{bmatrix}$ is a submatrix corresponding to a $(2n+1)^{\text{th}}$ to a $(3n)^{\text{th}}$

sequence elements in the matrix K, and $\begin{bmatrix} K_{2n+1} \\ K_{2n+2} \\ \dots \\ K_{3n} \end{bmatrix} \in \mathbb{R}^{n \times d}$ . $\begin{bmatrix} V_{2n+1} \\ V_{2n+2} \\ \dots \\ V_{3n} \end{bmatrix}$ is a submatrix corresponding to a $(2n+1)^{th}$ to a $(3n)^{th}$ sequence elements in the matrix V, and $\begin{bmatrix} V_{2n+1} \\ V_{2n+2} \\ \dots \\ V_{3n} \end{bmatrix} \in \mathbb{R}^{n \times d}$ . In addition, $\begin{bmatrix} O_1'' \\ O_2'' \\ \dots \\ O_m'' \end{bmatrix} \in \mathbb{R}^{m \times d}$ .

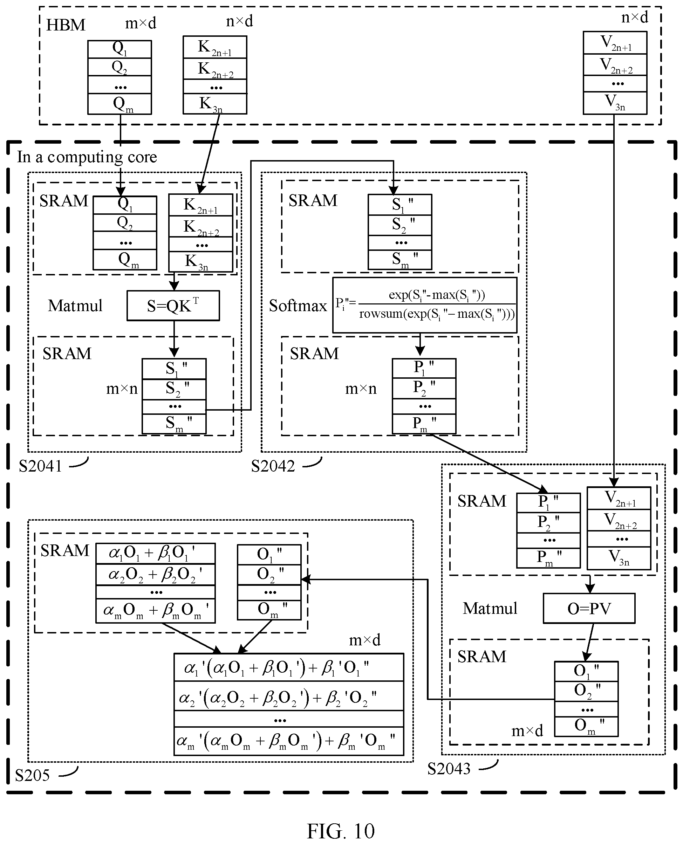

Specifically, similar to the processes of S201 and S202, as shown in FIG. 10, S204 may specifically include the following steps.

S2041: The computing core calculates a matrix multiplication result $\begin{bmatrix} S_1'' \\ S_2'' \\ \dots \\ S_m'' \end{bmatrix}$ of $\begin{bmatrix} Q_1 \\ Q_2 \\ \dots \\ Q_m \end{bmatrix}$ and

$\begin{bmatrix} K_{2n+1} \\ K_{2n+2} \\ \dots \\ K_{3n} \end{bmatrix}^T \cdot \begin{bmatrix} S_1'' \\ S_2'' \\ \dots \\ S_m'' \end{bmatrix} \in \mathbb{R}^{m \times n}$ . To be specific, $\begin{bmatrix} S_1'' \\ S_2'' \\ \dots \\ S_m'' \end{bmatrix}$ is an m×n matrix.

S2042: The computing core normalizes $\begin{bmatrix} S_1'' \\ S_2'' \\ \dots \\ S_m'' \end{bmatrix}$ to obtain $\begin{bmatrix} P_1'' \\ P_2'' \\ \dots \\ P_m'' \end{bmatrix}$ . $\begin{bmatrix} P_1'' \\ P_2'' \\ \dots \\ P_m'' \end{bmatrix} \in \mathbb{R}^{m \times n}$ . To be specific,

$\begin{bmatrix} P_1'' \\ P_2'' \\ \dots \\ P_m'' \end{bmatrix}$ is a matrix with m rows and n columns.

S2043: The computing core calculates a matrix multiplication result $\begin{bmatrix} O_1'' \\ O_2'' \\ \dots \\ O_m'' \end{bmatrix}$ of $\begin{bmatrix} P_1'' \\ P_2'' \\ \dots \\ P_m'' \end{bmatrix}$ and $\begin{bmatrix} V_{2n+1} \\ V_{2n+2} \\ \dots \\ V_{3n} \end{bmatrix}$ .

For specific implementation processes of S2041 to S2043, refer to the content of S2011 to S2013 or S2021 to S2023. Repeated content is not described herein again.

S205: The computing core determines, based on $\begin{bmatrix} \alpha_1 Q_1 + \beta_1 O_1' \\ \alpha_2 Q_2 + \beta_2 Q_2' \\ \dots \\ \alpha_m Q_m + \beta_m Q_m' \end{bmatrix}$ and $\begin{bmatrix} O_1'' \\ O_2'' \\ \dots \\ O_m'' \end{bmatrix}$ , a calculation result

obtained by performing calculation on $\begin{bmatrix} Q_1 \\ Q_2 \\ \cdots \\ Q_m \end{bmatrix}$, $\begin{bmatrix} K_1 \\ K_2 \\ \cdots \\ K_{3n} \end{bmatrix}$, and $\begin{bmatrix} V_1 \\ V_2 \\ \cdots \\ V_{3n} \end{bmatrix}$ based on the self-attention mechanism.

It can be understood that $\begin{bmatrix} K_1 \\ K_2 \\ \cdots \\ K_{3n} \end{bmatrix}$ is a matrix obtained by splicing $\begin{bmatrix} K_1 \\ K_2 \\ \cdots \\ K_n \end{bmatrix}$, $\begin{bmatrix} K_{n+1} \\ K_{n+2} \\ \cdots \\ K_{2n} \end{bmatrix}$, and $\begin{bmatrix} K_{2n+1} \\ K_{2n+2} \\ \cdots \\ K_{3n} \end{bmatrix}$, and

$\begin{bmatrix} V_1 \\ V_2 \\ \cdots \\ V_{3n} \end{bmatrix}$ is a matrix obtained by splicing $\begin{bmatrix} V_1 \\ V_2 \\ \cdots \\ V_n \end{bmatrix}$, $\begin{bmatrix} V_{n+1} \\ V_{n+2} \\ \cdots \\ V_{2n} \end{bmatrix}$, and $\begin{bmatrix} V_{2n+1} \\ V_{2n+2} \\ \cdots \\ V_{3n} \end{bmatrix}$.

For example, parameters $\begin{bmatrix} \alpha_1' \\ \alpha_2' \\ \cdots \\ \alpha_m' \end{bmatrix}$ and $\begin{bmatrix} \beta_1' \\ \beta_2' \\ \cdots \\ \beta_m' \end{bmatrix}$ may be obtained through calculation based on the following formula set (5), and $\begin{bmatrix} \alpha_1'(\alpha_1 Q_1 + \beta_1 O_1') + \beta_1' O_1'' \\ \alpha_2'(\alpha_2 Q_2 + \beta_2 Q_2') + \beta_1' O_2'' \\ \cdots \\ \alpha_m'(\alpha_m Q_m + \beta_m Q_m') + \beta_1' O_m'' \end{bmatrix}$ is the calculation result obtained by performing calculation

on $\begin{bmatrix} Q_1 \\ Q_2 \\ \cdots \\ Q_m \end{bmatrix}$, $\begin{bmatrix} K_1 \\ K_2 \\ \cdots \\ K_{3n} \end{bmatrix}$, and $\begin{bmatrix} V_1 \\ V_2 \\ \cdots \\ V_{3n} \end{bmatrix}$ based on the self-attention mechanism:

$$M = \text{rowmax}\left(\begin{bmatrix} S_1'' \\ S_2'' \\ \cdots \\ S_m'' \end{bmatrix}\right)$$

$$L = \text{rowsum}\left(\begin{bmatrix} P_1'' \\ P_2'' \\ \cdots \\ P_m'' \end{bmatrix}\right)$$

$$M^{\text{new}} = max(M^{\text{old}}, M))$$

$$L^{\text{new}} = e^{M^{\text{old}} - M^{\text{new}}} \odot L^{\text{old}} + e^{M - M^{\text{new}}} \odot L$$

$$\begin{bmatrix} \alpha_1'' \\ \alpha_2'' \\ \cdots \\ \alpha_m'' \end{bmatrix} = \text{diag}(L^{\text{new}})^{-1}(\text{diag}(L^{\text{old}})e^{M^{\text{old}} - M^{\text{new}}})$$

$$\begin{bmatrix} \beta_1'' \\ \beta_2'' \\ \cdots \\ \beta_m'' \end{bmatrix} = \text{diag}(L^{\text{new}})^{-1}(e^{M - M^{\text{new}}})$$

Formula set (5)

A value of $M^{\text{old}}$ is $M^{\text{new}}$ in the formula set (4), and a value of $L^{\text{old}}$ is $L^{\text{new}}$ in the formula set (4).

Then, according to the content of S202 to S205, remaining submatrices in the matrix K and the matrix V may be further traversed to obtain a calculation result $\begin{bmatrix} O_1^{(y)} \\ O_2^{(y)} \\ \cdots \\ O_m^{(y)} \end{bmatrix}$ obtained by performing calculation on $\begin{bmatrix} Q_1 \\ Q_2 \\ \cdots \\ Q_m \end{bmatrix}, \begin{bmatrix} K_1 \\ K_2 \\ \cdots \\ K_y \end{bmatrix}$, and $\begin{bmatrix} V_1 \\ V_2 \\ \cdots \\ V_y \end{bmatrix}$ based on the self attention mechanism. y is a multiple of n, and $\begin{bmatrix} O_1^{(y)} \\ O_2^{(y)} \\ \cdots \\ O_m^{(y)} \end{bmatrix} \in \mathbb{R}^{m \times d}$.

The following is considered: In this embodiment of this application, the matrix K and the matrix V are divided into submatrices for operations. Therefore, when a matrix multiplication operation is performed by using the matrix multiplication-dedicated hardware unit and a vector operation is performed by using the vector computing hardware unit, a plurality of operation flows may be performed in parallel. For ease of description, in this embodiment of this application, an operation process corresponding to a submatrix of a matrix Q, a submatrix of a matrix K, and a submatrix of a matrix V is referred to as an "operation flow". For example, S201, S202, S204, and S206 each may an operation flow.

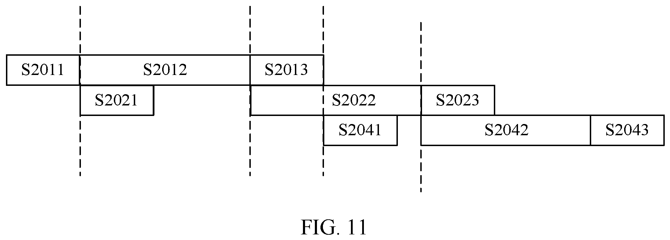

For example, as shown in FIG. 11, after S2011 is performed by using the matrix multiplication-dedicated hardware unit, S2021 may be performed by using the matrix multiplication-dedicated hardware unit without waiting for other steps of S201 to be performed; after S2012 is performed by using the vector computing hardware unit, S2022 may be performed by using the vector computing hardware unit; after S2013 is performed by using the matrix multiplication-dedicated hardware unit, S2041 may be performed by using the matrix multiplication-dedicated hardware unit; after S2022 is performed by using the vector computing hardware unit, S2042 may be performed by using the vector computing hardware unit; and so on. In this way, operation efficiency can be improved.

Then calculation may be performed on the last submatrices $\begin{bmatrix} K_{N-y} \\ K_{N-y+1} \\ \cdots \\ K_N \end{bmatrix}$ and $\begin{bmatrix} V_{N-y} \\ V_{N-y+1} \\ \cdots \\ V_N \end{bmatrix}$ of the matrix K and the matrix V according to the following process of S206 and S207, to obtain the calculation result corresponding to the first m sequence elements in the matrix O (to be specific, a result of performing calculation on the matrix Q, the matrix K, and the matrix V based on the self-attention mechanism).

S206: The computing core performs calculation on $\begin{bmatrix} Q_1 \\ Q_2 \\ \cdots \\ Q_m \end{bmatrix}$, $\begin{bmatrix} K_{N-y} \\ K_{N-y+1} \\ \cdots \\ K_N \end{bmatrix}$, and $\begin{bmatrix} V_{N-y} \\ V_{N-y+1} \\ \cdots \\ V_N \end{bmatrix}$ based on the self-attention mechanism, to obtain a calculation result $\begin{bmatrix} O_1^{(N)} \\ O_2^{(N)} \\ \cdots \\ O_m^{(N)} \end{bmatrix}$. $\begin{bmatrix} Q_1 \\ Q_2 \\ \cdots \\ Q_m \end{bmatrix}$ is a submatrix corresponding to the first m sequence elements in the matrix Q, and $\begin{bmatrix} Q_1 \\ Q_2 \\ \cdots \\ Q_m \end{bmatrix} \in \mathbb{R}^{m \times d}$. $\begin{bmatrix} K_{N-y} \\ K_{N-y+1} \\ \cdots \\ K_N \end{bmatrix}$ is a submatrix corresponding to an $(N-y)^{th}$ to an

$N^{th}$ sequence elements in the matrix K, and $\begin{bmatrix} K_{N-y} \\ K_{N-y+1} \\ \cdots \\ K_N \end{bmatrix} \in \mathbb{R}^{(N-y) \times d}$. $\begin{bmatrix} V_{N-y} \\ V_{N-y+1} \\ \cdots \\ V_N \end{bmatrix}$ is a submatrix corresponding to an $(N-y)^{th}$ to an $N^{th}$ sequence elements in the matrix V, and $\begin{bmatrix} V_{N-y} \\ V_{N-y+1} \\ \cdots \\ V_N \end{bmatrix} \in \mathbb{R}^{(N-y) \times d}$. In addition,

$\begin{bmatrix} O_1^{(N)} \\ O_2^{(N)} \\ \cdots \\ O_m^{(N)} \end{bmatrix} \in \mathbb{R}^{m \times d}$.

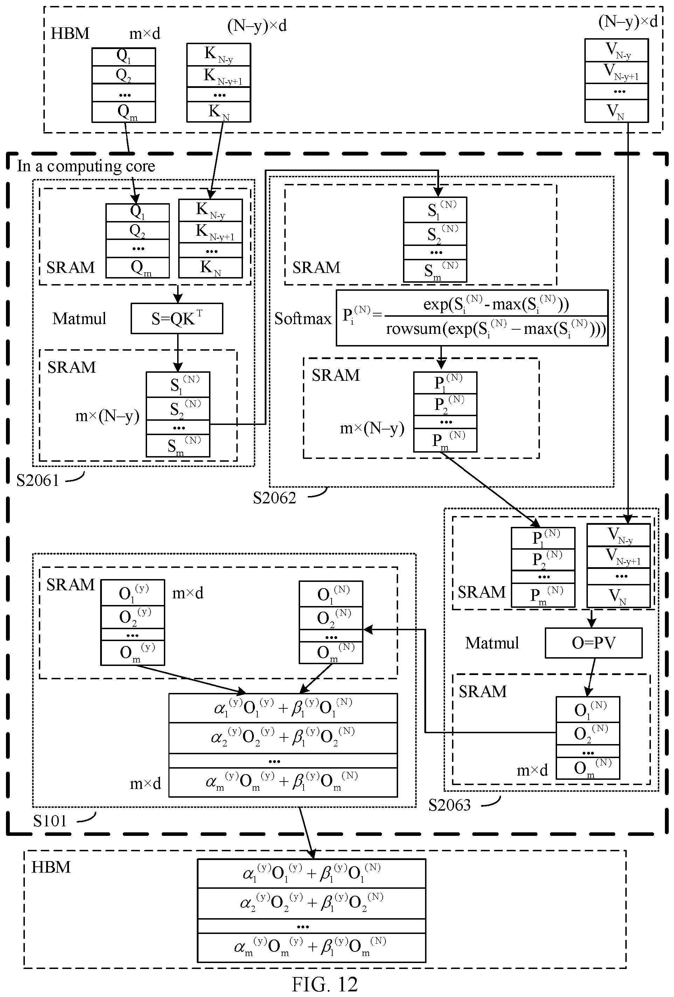

Specifically, similar to the processes of S201, S202, and S204, as shown in FIG. 12, S206 may include the following steps.

S2061: The computing core calculates a matrix multiplication result $\begin{bmatrix} S_1^{(N)} \\ S_2^{(N)} \\ \cdots \\ S_m^{(N)} \end{bmatrix}$ of $\begin{bmatrix} Q_1 \\ Q_2 \\ \cdots \\ Q_m \end{bmatrix}$ and $\begin{bmatrix} K_{N-y} \\ K_{N-y+1} \\ \cdots \\ K_N \end{bmatrix}^T$.

$$\begin{bmatrix} S_1^{(N)} \\ S_2^{(N)} \\ \dots \\ S_m^{(N)} \end{bmatrix} \in \mathbb{R}^{m \times (N\text{-}y)}.$$ To be specific, $\begin{bmatrix} S_1^{(N)} \\ S_2^{(N)} \\ \dots \\ S_m^{(N)} \end{bmatrix}$ is an m×(N-y) matrix.

S2062: The computing core normalizes $\begin{bmatrix} S_1^{(N)} \\ S_2^{(N)} \\ \dots \\ S_m^{(N)} \end{bmatrix}$ to obtain $\begin{bmatrix} P_1^{(N)} \\ P_2^{(N)} \\ \dots \\ P_m^{(N)} \end{bmatrix} \cdot \begin{bmatrix} P_1^{(N)} \\ P_2^{(N)} \\ \dots \\ P_m^{(N)} \end{bmatrix} \in \mathbb{R}^{m \times (N\text{-}y)}.$ To be

specific, $\begin{bmatrix} P_1^{(N)} \\ P_2^{(N)} \\ \dots \\ P_m^{(N)} \end{bmatrix}$ is an m×(N-y) matrix.

S2063: The computing core calculates a matrix multiplication result $\begin{bmatrix} O_1^{(N)} \\ O_2^{(N)} \\ \dots \\ O_m^{(N)} \end{bmatrix}$ of $\begin{bmatrix} P_1^{(N)} \\ P_2^{(N)} \\ \dots \\ P_m^{(N)} \end{bmatrix}$ and $\begin{bmatrix} V_{N\text{-}y} \\ V_{N\text{-}y+1} \\ \dots \\ V_N \end{bmatrix}$.

For specific implementation processes of S2061 to S2063, refer to the content of S2011 to S2013, S2021 to S2023, or S2041 to S2043. Repeated content is not described herein again.

S207: The computing core determines, based on $\begin{bmatrix} O_1^{(y)} \\ O_2^{(y)} \\ \dots \\ O_m^{(y)} \end{bmatrix}$ and $\begin{bmatrix} O_1^{(N)} \\ O_2^{(N)} \\ \dots \\ O_m^{(N)} \end{bmatrix}$, a calculation result obtained by

performing calculation on $\begin{bmatrix} Q_1 \\ Q_2 \\ \dots \\ Q_m \end{bmatrix}, \begin{bmatrix} K_1 \\ K_2 \\ \dots \\ K_N \end{bmatrix}$, and $\begin{bmatrix} V_1 \\ V_2 \\ \dots \\ V_N \end{bmatrix}$ based on the self-attention mechanism.

It can be understood that $\begin{bmatrix} K_1 \\ K_2 \\ \dots \\ K_N \end{bmatrix}$ is the matrix K, and $\begin{bmatrix} V_1 \\ V_2 \\ \dots \\ V_N \end{bmatrix}$ is the matrix V. Therefore, the calculation result in S207 is the calculation result corresponding to the first m sequence elements in the matrix O (to be specific, the result of performing calculation on the matrix Q, the matrix K, and the matrix V based on the self-attention mechanism).

For example, parameters $\begin{bmatrix} \alpha_1^{(y)} \\ \alpha_2^{(y)} \\ \cdots \\ \alpha_m^{(y)} \end{bmatrix}$ and $\begin{bmatrix} \beta_1^{(y)} \\ \beta_2^{(y)} \\ \cdots \\ \beta_m^{(y)} \end{bmatrix}$ may be obtained through calculation according to the foregoing process of calculating the parameters $\begin{bmatrix} \alpha_1 \\ \alpha_2 \\ \cdots \\ \alpha_m \end{bmatrix}$ and $\begin{bmatrix} \beta_1 \\ \beta_2 \\ \cdots \\ \beta_m \end{bmatrix}$ based on the formula set (4) and calculating the

parameters $\begin{bmatrix} \alpha_1' \\ \alpha_2' \\ \cdots \\ \alpha_m' \end{bmatrix}$ and $\begin{bmatrix} \beta_1' \\ \beta_2' \\ \cdots \\ \beta_m' \end{bmatrix}$ based on the formula set (5), and $\begin{bmatrix} \alpha_1^{(y)}Q_1^{(y)} + \beta_1^{(y)}O_1^{(N)} \\ \alpha_2^{(y)}Q_2^{(y)} + \beta_2^{(y)}Q_2^{(N)} \\ \cdots \\ \alpha_m^{(y)}Q_m^{(y)} + \beta_m^{(y)}Q_m^{(N)} \end{bmatrix}$ is the calculation

result of performing calculation on $\begin{bmatrix} Q_1 \\ Q_2 \\ \cdots \\ Q_m \end{bmatrix}$, $\begin{bmatrix} K_1 \\ K_2 \\ \cdots \\ K_N \end{bmatrix}$, and $\begin{bmatrix} V_1 \\ V_2 \\ \cdots \\ V_N \end{bmatrix}$ based on the self-attention mechanism, that is, the calculation result corresponding to the first m sequence elements in the matrix O (to be specific, the result of performing calculation on the matrix Q, the matrix K, and the matrix V based on the self-attention mechanism).

Similarly, calculation results corresponding to other sequence elements in the matrix O may be calculated according to the foregoing process of S201 to S207, to obtain the matrix O.

It can be learned that, according to the foregoing process in this embodiment of this application, the matrix Q, the matrix K, and the matrix V may be divided into a plurality of submatrices through equal division, and the calculation result (namely, the matrix O) obtained by performing calculation on the matrix Q, the matrix K, and the matrix V based on the self-attention mechanism may be calculated by using the submatrices.

In this way, storage space occupied by intermediate data can be reduced, to reduce an amount of access to the HBM. For example, in the foregoing process of this embodiment of this application, after the operation process shown in FIG. 8 is completed, only $\begin{bmatrix} O_1 \\ O_2 \\ \cdots \\ O_m \end{bmatrix}$ needs to be stored for use in a subsequent step; after the operation process shown in FIG. 9 is completed, only $\begin{bmatrix} O_1' \\ O_2' \\ \cdots \\ O_m' \end{bmatrix}$, and $M^{new}$ and $L^{new}$ that are used to update the dynamic parameters $\alpha$ and $\beta$ need to be

stored for use in a subsequent step; and so on. When the intermediate data is stored in the SRAM, an amount of access to the HBM can be further reduced.

In addition, in the foregoing process of this embodiment of this application, the matrix K and the matrix V are divided into submatrices for operations. Therefore, when a matrix multiplication operation is performed by using the matrix multiplication-dedicated hardware unit and a vector operation is performed by using the vector computing hardware unit, operation processes corresponding to a plurality of submatrices may be performed in parallel. For details, refer to the example in FIG. 11. In this way, operation efficiency can be further improved.

In addition, in an implementation, the matrix Q, the matrix K, and the matrix V may be divided into submatrices based on an SRAM capacity corresponding to the computing core, so that data can be stored by using the SRAM during an operation process of each operation flow, to avoid storing data in the HBM.

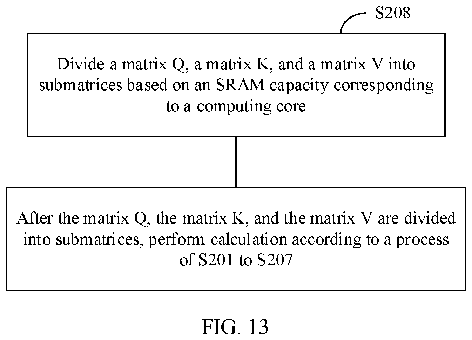

Specifically, as shown in FIG. 13, before S201 to S207, the method further includes the following step.

S208: The computing core divides the matrix Q, the matrix K, and the matrix V into submatrices based on the SRAM capacity corresponding to the computing core.

For example, in an operation flow, for example, the operation flow corresponding to S201 in FIG. 9, the computing core needs to read submatrices of the matrix Q, the matrix K, and the matrix V, with a data amount of $(m \times d + 2 \times n \times d) \times bt$, where bt indicates a quantity of bytes of each piece of data. In addition, the two matrices, with a data amount of $((m \times n) \times 2) \times bt$, generated in S2021 and S2022 need to be stored during an operation process. In addition, the matrix, with a data amount of $(m \times d) \times bt$, generated in S2023 further needs to be stored. In addition, the two dynamic parameters $M^{old}$ and $L^{old}$ with a data amount of $2m \times bt$ further need to be stored.

Submatrices of the matrix K and the matrix V may reuse storage space, and the two matrices generated in S2021 and S2022 may reuse storage space. Therefore, the matrix Q, the matrix K, and the matrix V may be divided into submatrices based on the following formula (6):

$$(m \times d + n \times d + m \times n + m \times d + 2m) \times bt \leq M \qquad \text{Formula (6)}$$

M is the SRAM capacity corresponding to the computing core.

In an implementation, during actual application, in one computing task, a plurality of batches of training data usually need to be calculated based on a multi-head self-attention mechanism. To be specific, task data in one computing task may include query matrices, key matrices, and value matrices of h head dimensions that correspond to each of a plurality of batches of training data. In addition, a chip for performing an operation may usually have a plurality of computing cores.

Therefore, a computing task may be first divided into a plurality of subtasks, and the subtasks are delivered to different computing cores. A query matrix, a key matrix, and a value matrix that correspond to a same head (head) dimension of training data of a same batch dimension are grouped into task data of a same subtask.

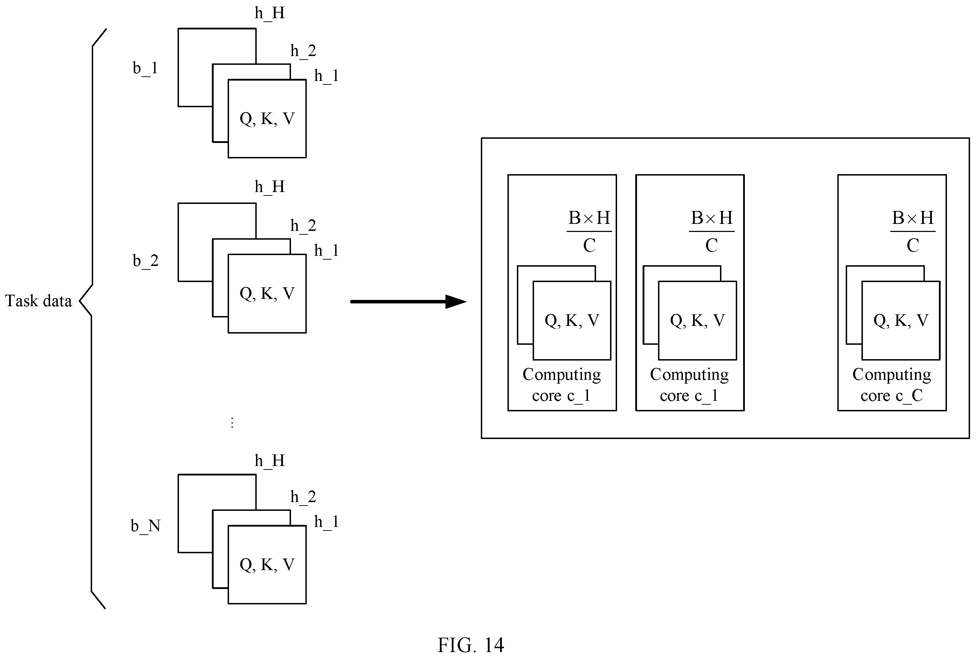

For example, as shown in FIG. 14, it is assumed that task data of a computing task includes B batches of training data (for example, b_1, b_2, ..., and b_B in the figure), and each piece of training data includes query matrices, key matrices, and value matrices of H head dimensions (for example, in the figure, h_1, h_2, ..., and h_H each include three matrices: Q, K, and V). In addition, a chip includes C computing cores (for example, c_1, c_2, ..., and c_C in the figure).

In this case, a query matrix, a key matrix, and a value matrix that correspond to a same head (head) dimension of training data of a same batch dimension are grouped into task data of a same subtask. Task data of each subtask may include $\dfrac{B \times H}{C}$ groups of query matrices, key matrices, and value matrices.

In this way, when subtasks are delivered to different computing cores for operations, parallel processing may be performed through a plurality of computing cores, to improve operation efficiency. In addition, each computing core may process task data according to the process of S201 to S208, to achieve the effects achieved in S201 to S208.

In a possible design, when a computing task is divided into a plurality of subtasks, division may be performed in the following manner: Task data, among data of the task, that corresponds to a same batch dimension is grouped into a same subtask.

Specifically, in a memory (for example, a DRAM), task data is usually preferentially arranged based on batch dimensions, and therefore task data corresponding to a same batch dimension may be grouped into a same subtask. For example, in FIG. 14, query matrices, key matrices, and value matrices of all head dimensions that correspond to b_1 are grouped into a same subtask; query matrices, key matrices, and value matrices of all head dimensions that correspond to b_2 are grouped into a same subtask; and so on. In this way, because task data corresponding to a same batch dimension is continuous in the memory, the computing core can quickly read, from the memory, data needed for an operation, to improve operation efficiency.

In addition, it should be noted that, in the foregoing embodiment, for ease of description, the matrix Q, the matrix K, and the matrix V are divided into a plurality of submatrices through equal division. During specific implementation, equal division may alternatively not be used. For example, when N cannot be exactly divided by m, a plurality of submatrices corresponding to the matrix Q may include a submatrix with a size of $m \times d$, or may include a submatrix with another rule (to be specific, a submatrix in which a quantity of rows is not m). For another example, when N cannot be exactly divided by n, a plurality of submatrices corresponding to the matrix K or the matrix V may include a submatrix with a size of n×d, or may include a submatrix with another rule (to be specific, a submatrix in which a quantity of rows is not n).

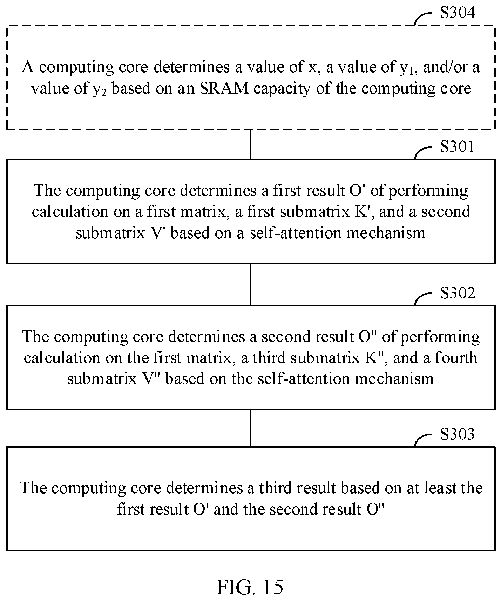

With reference to the foregoing content, the following describes a data processing method provided in embodiments of this application. The method may be used for a chip to perform, based on a self-attention mechanism, calculation on a query matrix Q, a key matrix K, and a value matrix V that correspond to a sequence X. Specifically, as shown in FIG. 15, the method may include the following steps.

S301: A computing core in a chip determines a first result O' of performing calculation on a first matrix, a first submatrix K', and a second submatrix V' based on a self-attention mechanism.

Specifically, the chip may include one or more computing cores. Herein, only a processing process of one computing core is used as an example for description. It can be understood that, during actual application, another computing core in the chip may also process data according to content of the method.

The first matrix is a submatrix of a query matrix Q, or the first matrix is the query matrix Q. The first submatrix K' is a submatrix of a key matrix K. The second submatrix V' is a submatrix of a value matrix $V$. $Q, K, V \in \mathbb{R}^{N \times d}$, and $K', V' \in \mathbb{R}^{y_1 \times d}$. x, y $_1$, , N, and d are positive integers. x≤N, and y $_1$ <N.

For example, when the method is applied to the process shown in FIG. 7A, FIG. 7B, and FIG. 7C, the first result O'

may be $\begin{bmatrix} O_1^{(y)} \\ O_2^{(y)} \\ ... \\ O_m^{(y)} \end{bmatrix}$ obtained before S206 in the process shown in FIG. 7C. The first matrix may be $\begin{bmatrix} Q_1 \\ Q_2 \\ ... \\ Q_m \end{bmatrix}$ in the process

shown in FIG. 7A, FIG. 7B, and FIG. 7C. In this case, x=m. The first submatrix K' may be $\begin{bmatrix} K_1 \\ K_2 \\ \cdots \\ K_y \end{bmatrix}$ in the process shown in FIG. 7A, FIG. 7B, and FIG. 7C. The second submatrix V' may be $\begin{bmatrix} V_1 \\ V_2 \\ \cdots \\ V_y \end{bmatrix}$ in the process shown in FIG. 7A, FIG. 7B, and FIG.

7C.

For a specific implementation process of S301, refer to the content of S201 to S205 in the process shown in FIG. 7A and FIG. 7B.

S302: The computing core determines a second result O" of performing calculation on the first matrix, a third submatrix K", and a fourth submatrix V" based on the self-attention mechanism.

The third submatrix K" is a submatrix of the matrix K other than the first submatrix K'. The fourth submatrix V' is a submatrix of the matrix V other than the second submatrix $V'$, $K'', V'' \in \mathbb{R}^{y_2 \times d}$, y $_2$ is a positive integer less than N-y $_1$, and $Q'' \in \mathbb{R}^{x \times d}$.

For example, the second result O" may be $\begin{bmatrix} O_1^{(N)} \\ O_2^{(N)} \\ ... \\ O_m^{(N)} \end{bmatrix}$ obtained in S206 in the process shown in FIG. 7C. The third submatrix K" may be $\begin{bmatrix} K_{N-y} \\ K_{N-y+1} \\ ... \\ K_N \end{bmatrix}$ in the process shown in FIG. 7A, FIG. 7B, and FIG. 7C. The fourth submatrix V" may

be $\begin{bmatrix} V_{N-y} \\ V_{N-y+1} \\ ... \\ V_N \end{bmatrix}$ in the process shown in FIG. 7A, FIG. 7B, and FIG. 7C.

For a specific implementation process of S302, refer to the content of S206 in the process shown in FIG. 7C.

In an implementation, the first matrix is the query (query) matrix Q, and a third result is a matrix O obtained by performing calculation on the matrix Q, the matrix K, and the matrix V based on the self-attention mechanism.

In an implementation, the first matrix is a submatrix Q' of the matrix $Q$, $Q' \in \mathbb{R}^{x \times d}$, x<N, a third result is a submatrix O" of a matrix O obtained by performing calculation on the matrix Q, the matrix K, and the matrix V based on the self-attention mechanism, $O''' \in \mathbb{R}^{x \times d}$, and the method further includes: obtaining the matrix O based on at least the third result.

In an implementation, S302 may specifically include the following steps.

S3021: The computing core determines a first intermediate result S based on the first matrix and the third submatrix K".

The first intermediate result S is a result of performing matrix multiplication on the first matrix and a transposed matrix K"$^T$ of the third submatrix K".

For example, for a specific implementation process of S3021, refer to the foregoing implementation process of S2061. The first intermediate result S may be $\begin{bmatrix} S_1^{(N)} \\ S_2^{(N)} \\ ... \\ S_m^{(N)} \end{bmatrix}$ obtained in S2061.

S3022: The computing core determines a second intermediate result P based on the first intermediate result S.

The second intermediate result P is a result of normalizing the first intermediate result S.

For example, for a specific implementation process of S3022, refer to the foregoing implementation process of S2062. The second intermediate result P may be $\begin{bmatrix} P_1^{(N)} \\ P_2^{(N)} \\ ... \\ P_m^{(N)} \end{bmatrix}$ obtained in S2062.

S3023: The computing core determines the second result O" based on the second intermediate result P and the fourth submatrix V".

The second result O" is a result of performing matrix multiplication on the second intermediate result P and the fourth submatrix V'.

For example, for a specific implementation process of S3023, refer to the foregoing implementation process of S2063.

In an implementation, the first intermediate result S and the second intermediate result P are stored in a static random access memory SRAM in the computing core.

For example, in FIG. 12, $\begin{bmatrix} S_1^{(N)} \\ S_2^{(N)} \\ ... \\ S_m^{(N)} \end{bmatrix}$ and $\begin{bmatrix} P_1^{(N)} \\ P_2^{(N)} \\ ... \\ P_m^{(N)} \end{bmatrix}$ are stored in the SRAM.

S303: The computing core determines a third result based on at least the first result O' and the second result O".

The third result is a matrix O obtained by performing calculation on the matrix Q, the matrix K, and the matrix V based on the self-attention mechanism, or a submatrix of the matrix O, and $O \in \mathbb{R}^{N \times d}$.

In an implementation, the first matrix is the query (query) matrix Q, and the third result is the matrix O obtained by performing calculation on the matrix Q, the matrix K, and the matrix V based on the self-attention mechanism.

In an implementation, the first matrix is a submatrix Q' of the matrix $Q, Q' \in \mathbb{R}^{x \times d}$, x is a positive integer less than N, the third result is a submatrix O" of the matrix O obtained by performing calculation on the matrix Q, the matrix K, and the matrix V based on the self-attention mechanism, $O''' \in \mathbb{R}^{x \times d}$, and the method further includes: obtaining the matrix O based on at least the third result.

For example, the third result may be $\begin{bmatrix} \alpha_1^{(y)}Q_1^{(y)} + \beta_1^{(y)}O_1^{(N)} \\ \alpha_2^{(y)}Q_2^{(y)} + \beta_2^{(y)}Q_2^{(N)} \\ ... \\ \alpha_m^{(y)}Q_m^{(y)} + \beta_m^{(y)}Q_m^{(N)} \end{bmatrix}$ obtained in S207 in the process shown in

FIG. 7C. $\begin{bmatrix} \alpha_1^{(y)}Q_1^{(y)} + \beta_1^{(y)}O_1^{(N)} \\ \alpha_2^{(y)}Q_2^{(y)} + \beta_2^{(y)}Q_2^{(N)} \\ ... \\ \alpha_m^{(y)}Q_m^{(y)} + \beta_m^{(y)}Q_m^{(N)} \end{bmatrix}$ is a calculation result obtained by performing calculation on $\begin{bmatrix} Q_1 \\ Q_2 \\ ... \\ Q_m \end{bmatrix}, \begin{bmatrix} K_1 \\ K_2 \\ ... \\ K_N \end{bmatrix}$,

and $\begin{bmatrix} V_1 \\ V_2 \\ ... \\ V_N \end{bmatrix}$ based on the self-attention mechanism, that is, a calculation result corresponding to the first m sequence elements in the matrix O (to be specific, a result of performing calculation on the matrix Q, the matrix K, and the matrix V based on the self-attention mechanism).

For a specific implementation process of S303, refer to the content of S207 in the process shown in FIG. 7C.

In an implementation, the method may further include the following step.

S304: The computing core determines a value of x, a value of $y_1$, , and/or a value of $y_2$ based on an SRAM capacity of the computing core.

For a specific implementation process of S304, refer to corresponding content of S208. Details are not described herein again.

It can be understood that, to implement the foregoing embodiments, a chip includes corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

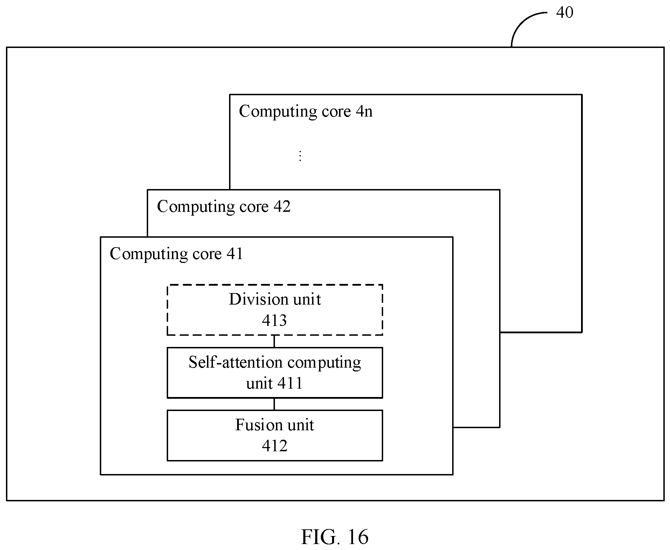

FIG. 16 is a diagram of a structure of a chip according to this application. The chip 40 may be configured to implement functions for the chip to perform the steps described in FIG. 7A to FIG. 15.

Specifically, as shown in FIG. 16, the chip 40 may include one or more computing cores. In the figure, a computing core 41, a computing core 42, ..., and a computing core 4n are used as an example for description. The computing cores in the chip 40 may be configured to implement functions for the chip to perform the steps described in FIG. 7A to FIG. 15.

Functional modules included in the computing core 41 are used below as an example for description. It can be understood that, when a plurality of computing cores in the chip 40 are used to perform computing tasks in a self-attention mechanism, for functional modules included in each computing core, reference may be made to the functional modules included in the computing core 41 in the following descriptions.

The computing core 41 may include a self-attention computing unit 411 and a fusion unit 412.

The self-attention computing unit 411 is configured to determine a first result O' of performing calculation on a first matrix, a first submatrix K', and a second submatrix V' based on a self-attention (self-attention) mechanism.

The first matrix is a submatrix of a query (query) matrix Q, or the first matrix is the query matrix Q. The first submatrix K' is a submatrix of a key (key) matrix K. The second submatrix V' is a submatrix of a value (value) matrix V. $Q, K, V \in \mathbb{R}^{N \times d}$, and $K', V' \in \mathbb{R}^{y_1 \times d}$. x, $y_1$, N, and d are positive integers. $x \leq N$, and $y_1 < N$.

The self-attention computing unit 411 is further configured to determine a second result O" of performing calculation on the first matrix, a third submatrix K', and a fourth submatrix V" based on the self-attention mechanism.

The third submatrix K' is a submatrix of the matrix K other than the first submatrix K'. The fourth submatrix V" is a submatrix of the matrix V other than the second submatrix V'. $K'', V'' \in \mathbb{R}^{y_2 \times d}$, $y_2$ is a positive integer less than $N - y_1$, and $Q'' \in \mathbb{R}^{x \times d}$.

The fusion unit 412 is configured to determine a third result based on at least the first result O' and the second result O".

The third result is a matrix O obtained by performing calculation on the matrix Q, the matrix K, and the matrix V based on the self-attention mechanism, or a submatrix of the matrix O, and $O \in \mathbb{R}^{N \times d}$.

In an implementation, the first matrix is the query (query) matrix Q, and the third result is the matrix O obtained by performing calculation on the matrix Q, the matrix K, and the matrix V based on the self-attention mechanism.

In an implementation, the first matrix is a submatrix Q' of the matrix $Q, Q' \in \mathbb{R}^{x \times d}$, x<N, the third result is a submatrix O''' of the matrix O obtained by performing calculation on the matrix Q, the matrix K, and the matrix V based on the self-attention mechanism, $O''' \in \mathbb{R}^{x \times d}$, and the method further includes: obtaining the matrix O based on at least the third result.

In an implementation, the computing core further includes: a division unit 413, configured to determine a value of x, a value of $y_1$, and/or a value of $y_2$ based on an SRAM capacity of the computing core.

In an implementation, that the self-attention computing unit 412 is further configured to determine the second result O" of performing calculation on the first matrix, the third submatrix K", and the fourth submatrix V" based on the self-attention mechanism includes:

The self-attention computing unit 412 is further configured to determine a first intermediate result S based on the first matrix and the third submatrix K", where the first intermediate result S is a result of performing matrix multiplication on the first matrix and a transposed matrix K"$^T$ of the third submatrix K".

The self-attention computing unit 412 is further configured to determine a second intermediate result P based on the first intermediate result S, where the second intermediate result P is a result of normalizing the first intermediate result S.

The self-attention computing unit 412 is further configured to determine the second result O" based on the second intermediate result P and the fourth submatrix V', where the second result O" is a result of performing matrix multiplication on the second intermediate result P and the fourth submatrix V".

In an implementation, the first intermediate result S and the second intermediate result P are stored in a static random access memory SRAM in the computing core.

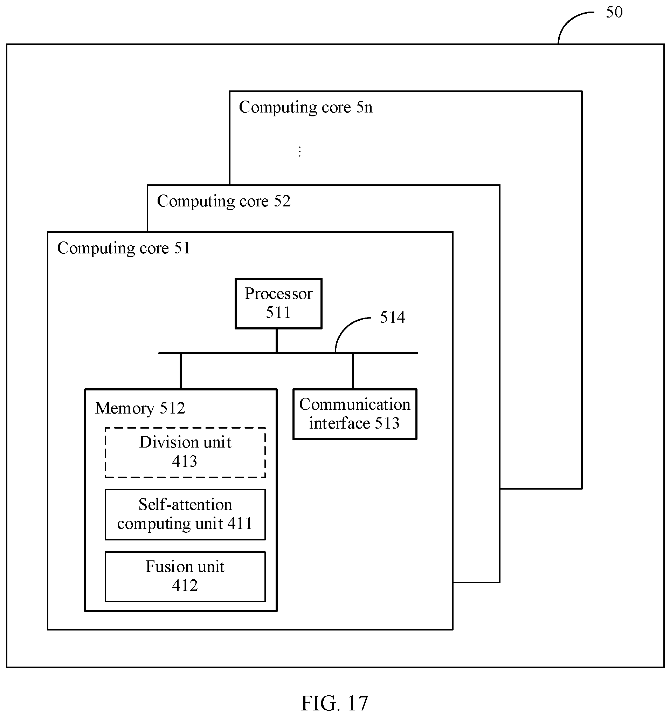

FIG. 17 is a diagram of a structure of another chip according to an embodiment. The chip 50 may be configured to implement functions for the chip to perform the steps described in FIG. 7A to FIG. 15.

Specifically, as shown in FIG. 17, the chip 50 may include one or more computing cores. In the figure, a computing core 51, a computing core 52, ..., and a computing core 5n are used as an example for description. The computing cores in the chip 50 may be configured to implement functions for the chip to perform the steps described in FIG. 7A to FIG. 15.

Functional modules included in the computing core 51 are used below as an example for description. It can be understood that, when a plurality of computing cores in the chip 50 are used to perform computing tasks in a self-attention mechanism, for functional modules included in each computing core, reference may be made to the functional modules included in the computing core 51 in the following descriptions.

The computing core 51 may include a part or all of the following components: a processor 511, a memory 512, a communication interface 513, and a communication line 514.

The processor 511 is configured to perform functions for the chip to perform the steps described in FIG. 7A to FIG. 15.

Specifically, the processor 511 may include a general-purpose central processing unit (central processing unit, CPU), a microprocessor, a field programmable gate array (Field Programmable Gate Array, FPGA), a digital signal processor (digital signal processor, DSP) or an application-specific integrated circuit (application-specific integrated circuit, ASIC), another programmable logic device, a discrete gate or transistor logic device, a discrete hardware component, or the like.

In addition, the memory 512 may be an SRAM, an HBM, or the like.

The memory 512 stores computer instructions. The processor 511 may execute the computer instructions stored in the memory 512, to perform all or a part of the steps in the methods provided in embodiments. As shown in FIG. 17, the computer instructions stored in the memory 512 may include software modules for implementing the functions of the self-attention computing unit 411, the fusion unit 412, and the division unit 413. The processor 511 may execute the computer instructions stored in the memory 512, to perform the methods provided in embodiments.

Optionally, the computer-executable instructions in this embodiment may also be referred to as application program code. This is not specifically limited in this embodiment.

In addition, the communication interface 513 is configured to connect the components in the computing core 51,

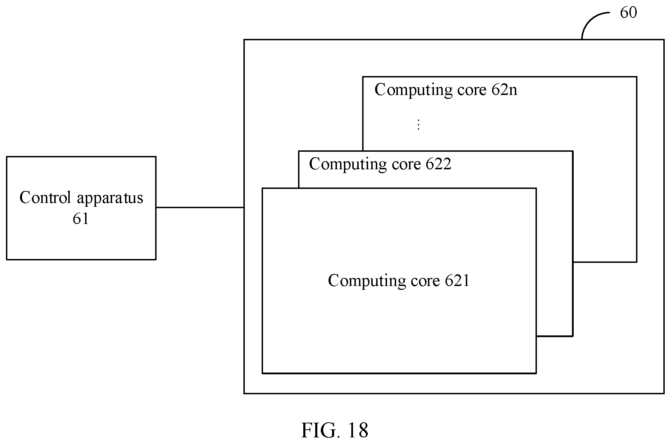

In addition, an embodiment of this application further provides a data processing system. As shown in FIG. 18, the data processing system 60 includes a control apparatus 61 and a chip 62. The chip 62 may include a plurality of computing cores. In the figure, a computing core 621, a computing core 622, ..., and a computing core 62n are used as an example for description.

The control apparatus 61 may be configured to divide a computing task into a plurality of subtasks according to the process shown in FIG. 14, and send the plurality of subtasks to a plurality of computing cores in the chip 62, so that the computing cores in the chip 62 implement functions for the chip to perform the steps described in FIG. 7A to FIG. 15. During actual application, a function of the control apparatus 61 may be implemented by a driver of the chip 62. Alternatively, when the chip 62 is an intelligent chip other than a host CPU, a function of the control apparatus 61 may be implemented by the host CPU. In addition, the control apparatus 61 may alternatively be integrated in the chip 62. In this case, a function of the control apparatus 61 may be implemented by a software/hardware module in the chip 62. A specific form of the control apparatus 61 may not be limited in this embodiment of this application.

Specifically, the control apparatus 61 is configured to obtain a computing task. The computing task indicates to perform calculation on task data based on a self-attention mechanism. The task data includes a query matrix, a key matrix, and a value matrix that correspond to each of h head dimensions, in multi-head self-attention (multi-head self-attention), that correspond to training data of each of B batch dimensions.

The control apparatus 61 is further configured to divide the computing task into a plurality of subtasks. A query matrix, a key matrix, and a value matrix that correspond to a same head dimension of training data of a same batch dimension are grouped into task data of a same subtask, and each subtask indicates to perform calculation on task data in the subtask based on the self-attention mechanism.

The control apparatus 61 is further configured to separately send the plurality of subtasks to different computing cores in the chip 60.

After receiving a subtask from the control apparatus 61, each computing core in the chip 62 performs the steps performed by the chip described in FIG. 7A to FIG. 15.

In addition, an embodiment of this application further provides a computer-readable storage medium. The computer-readable storage medium stores instructions. When the instructions are run on a chip, the chip may perform all or a part of content of the steps performed by the chip described in FIG. 7A to FIG. 15 in embodiments of this application.

An embodiment of this application further provides a computer program product including instructions. When the instructions are run on a chip, the chip may perform all or a part of content of the steps performed by the chip described in FIG. 7A to FIG. 15 in embodiments of this application.

The method steps in embodiments may be implemented by hardware, or may be implemented by a processor executing software instructions. The software instructions include corresponding software modules. The software modules may be stored in a RAM, a flash memory, a ROM, a PROM, an EPROM, an EEPROM, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a resource changing apparatus. Certainly, the processor and the storage medium may alternatively exist in a resource changing apparatus as discrete components.

All or some of the foregoing embodiments may be implemented by software, hardware, firmware, or any combination thereof. When the embodiments are implemented by software, all or some of the embodiments may be implemented in a form of a computer program product. The computer program product includes one or more computer programs or instructions. When the computer programs or instructions are loaded and executed on a computer, all or some of the processes or the functions in embodiments are performed. The computer may be a general-purpose computer, a dedicated computer, a computer network, a communication apparatus, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc (digital video disc, DVD); or may be a semiconductor medium, for example, an SSD.

In embodiments, unless otherwise specified or a logic conflict occurs, terms and/or descriptions in different implementations are consistent and may be mutually referenced, and technical features in different embodiments may be combined into a new embodiment based on an internal logical relationship between the technical features.

In embodiments, "at least one" means one or more, "a plurality of" means two or more, and other quantifiers are similar to the foregoing cases. "And/or" describes an association relationship between associated objects, and indicates that three relationships may exist. For example, A and/or B may indicate the following three cases: Only A exists, both A and B exist, and only B exists. In addition, an element (element) appearing in a singular form with "a", "an", or "the" does not mean "one or only one" unless otherwise specified in the context, but means "one or more than one". For example, "a device" means one or more such devices. Further, "at least one of (at least one of) ..." means one or any combination of subsequent associated objects. For example, "at least one of A, B, and C" includes A, B, C, AB, AC, BC, or ABC. In the text descriptions of embodiments, the character "/" usually indicates an "or" relationship between the associated objects. In a formula in embodiments, the character "/" indicates a "division" relationship between the associated objects.

## Claims

1. A data processing method, wherein the method is applied to a chip, the chip comprises a computing core, and the method comprises:

    performing, by the computing core, calculation on a first matrix, a first submatrix K', and a second submatrix V' based on a self-attention self-attention mechanism, to obtain a first result O', wherein the first matrix is a submatrix Q' of a query query matrix Q or the first matrix is the query matrix Q, the first submatrix K' is a submatrix of a key key matrix K, the second submatrix V' is a submatrix of a value value matrix V, $Q, K, V \in i^{N \times d}$, $Q' \in i^{x \times d}$, $K', V' \in i^{y1 \times d}$, x, $y_1$, , N, and d are positive integers, x<N, and $y_1$ <N;
    performing, by the computing core, calculation on the first matrix, a third submatrix K", and a fourth submatrix V" based on the self-attention mechanism, to obtain a second result O", wherein the third submatrix K" is a submatrix of the matrix K other than the first submatrix K', the fourth submatrix V' is a submatrix of the matrix V other than the second submatrix V', $K", V" \in i^{y2 \times d}$, $y_2$ is a positive integer less than N-$y_1$, and $Q" \in i^{x \times d}$ ; and
    determining, by the computing core, a third result based on at least the first result O' and the second result O", wherein the third result is a matrix O obtained by performing calculation on the matrix Q, the matrix K, and the matrix V based on the self-attention mechanism, or the third result is a submatrix of the matrix O, and $O \in i^{N \times d}$.

2. The method according to claim 1, wherein the method further comprises: determining, by the computing core, a value of x, a value of $y_1$, and/or a value of $y_2$ based on an SRAM capacity of the computing core.

3. The method according to claim 1 or 2, wherein performing, by the computing core, calculation on the first matrix, the third submatrix K", and the fourth submatrix V" based on the self-attention mechanism, to obtain the second result O" comprises:

    determining, by the computing core, a first intermediate result S based on the first matrix and the third submatrix K', wherein the first intermediate result S is a result of performing matrix multiplication on the first matrix and a transposed matrix $K"^T$ of the third submatrix K";
    determining, by the computing core, a second intermediate result P based on the first intermediate result S, wherein the second intermediate result P is a result of normalizing the first intermediate result S; and
    determining, by the computing core, the second result O" based on the second intermediate result P and the fourth submatrix V", wherein the second result O" is a result of performing matrix multiplication on the second intermediate result P and the fourth submatrix V'.

4. The method according to claim 3, wherein the first intermediate result S and the second intermediate result P are stored in a static random access memory SRAM in the computing core.

5. The method according to claim 4, further comprising:

    before determining the second intermediate result P, reading S from the SRAM; and
    before determining the second result O", reading P from the SRAM.

6. A chip, wherein the chip comprises a computing core, and the computing core comprises:

a self-attention computing unit, configured to determine a first result O' of performing calculation on a first matrix, a first submatrix K', and a second submatrix V' based on a self-attention self-attention mechanism, wherein the first matrix is a submatrix Q' of a query query matrix Q or the first matrix is the query matrix Q, the first submatrix K' is a submatrix of a key key matrix K, the second submatrix V' is a submatrix of a value value matrix V, $Q,K,V \in i^{N \times d}$, $K',V' \in i^{y1 \times d}$, x, y$_1$, , N, and d are positive integers, x≤N, and y$_1$ <N, wherein
the self-attention computing unit is further configured to determine a second result O" of performing calculation on the first matrix, a third submatrix K", and a fourth submatrix V' based on the self-attention mechanism, wherein the third submatrix K' is a submatrix of the matrix K other than the first submatrix K', the fourth submatrix V" is a submatrix of the matrix V other than the second submatrix V', $K",V" \in i^{y2 \times d}$, y$_2$ is a positive integer less than N-y$_1$, and $Q" \in i^{x \times d}$; and
a fusion unit, configured to determine a third result based on at least the first result O' and the second result O", wherein the third result is a matrix O obtained by performing calculation on the matrix Q, the matrix K, and the matrix V based on the self-attention mechanism, or the third result is a submatrix of the matrix O, and $O \in i^{N \times d}$.

7. The chip according to claim 6, wherein the computing core further comprises:
a division unit, configured to determine a value of x, a value of y$_1$, and/or a value of y$_2$ based on an SRAM capacity of the computing core.

8. The chip according to claim 6 or 7, wherein that the self-attention computing unit is further configured to determine the second result O" of performing calculation on the first matrix, the third submatrix K", and the fourth submatrix V" based on the self-attention mechanism comprises:

the self-attention computing unit is further configured to determine a first intermediate result S based on the first matrix and the third submatrix K", wherein the first intermediate result S is a result of performing matrix multiplication on the first matrix and a transposed matrix K"$^T$ of the third submatrix K";
the self-attention computing unit is further configured to determine a second intermediate result P based on the first intermediate result S, wherein the second intermediate result P is a result of normalizing the first intermediate result S; and
the self-attention computing unit is further configured to determine the second result O" based on the second intermediate result P and the fourth submatrix V", wherein the second result O" is a result of performing matrix multiplication on the second intermediate result P and the fourth submatrix V'.

9. The chip according to claim 8, wherein the first intermediate result S and the second intermediate result P are stored in a static random access memory SRAM in the computing core.

10. A chip, comprising a computing core, wherein the computing core comprises a memory and a processor, the memory is configured to store computer instructions, and the processor is configured to invoke the computer instructions from the memory and run the computer instructions, to implement the method according to any one of claims 1 to 5.

11. A data processing system, comprising a chip and a control apparatus, wherein the chip comprises a plurality of computing cores;

the control apparatus is configured to obtain a computing task, wherein the computing task indicates to perform calculation on task data based on a self-attention self-attention mechanism, and the task data comprises a query query matrix, a key key matrix, and a value value matrix that correspond to each of h head head dimensions, in multi-head self-attention multi-head self-attention, that correspond to training data of each of B batch batch dimensions;
the control apparatus is further configured to divide the computing task into a plurality of subtasks, wherein a query matrix, a key matrix, and a value matrix that correspond to a same head dimension of training data of a same batch dimension are grouped into task data of a same subtask, and each subtask indicates to perform calculation on task data in the subtask based on the self-attention mechanism;
the control apparatus is further configured to separately send the plurality of subtasks to different computing cores in the chip; and
after receiving a subtask from the control apparatus, each computing core in the chip performs the method according to any one of claims 1 to 5.

**12.** A computer-readable storage medium, wherein the storage medium stores a computer program, and when the computer program is executed by a chip, the chip performs the method according to any one of claims 1 to 5.

**13.** A computer program product, wherein the computer program product comprises instructions, and when the instructions are run on a chip, the chip performs the method according to any one of claims 1 to 5.

FIG. 1

FIG. 2A

FIG. 2B

SRAM:19TB/s
(20MB)

HBM:1.5TB/s
(40GB)

DRAM:12.8GB/s
(>1TB)

FIG. 3

FIG. 4

FIG. 5

N×d

| $Q_1$ |
| $Q_2$ |
| ⋮ |
| $Q_N$ |

N×d

| $K_1$ |
| $K_2$ |
| ⋮ |
| $K_N$ |

N×d

| $V_1$ |
| $V_2$ |
| ⋮ |
| $V_N$ |

m×d

| $Q_1$ |
| $Q_2$ |
| ⋮ |
| $Q_m$ |

m×d

| $Q_{m+1}$ |
| $Q_{m+2}$ |
| ⋮ |
| $Q_{2m}$ |

...

n×d

| $K_1$ |
| $K_2$ |
| ... |
| $K_n$ |

n×d

| $K_{n+1}$ |
| $K_{n+2}$ |
| ... |
| $K_{2n}$ |

...

n×d

| $V_1$ |
| $V_2$ |
| ... |
| $V_n$ |

n×d

| $V_{n+1}$ |
| $V_{n+2}$ |
| ... |
| $V_{2n}$ |

...

FIG. 6

A computing core performs calculation on $\begin{bmatrix} Q_1 \\ Q_2 \\ \cdots \\ Q_m \end{bmatrix}$, $\begin{bmatrix} K_1 \\ K_2 \\ \cdots \\ K_n \end{bmatrix}$, and $\begin{bmatrix} V_1 \\ V_2 \\ \cdots \\ V_n \end{bmatrix}$

based on a self-attention mechanism, to obtain a calculation result $\begin{bmatrix} Q_1 \\ Q_2 \\ \cdots \\ Q_m \end{bmatrix}$

S201

S202

The computing core performs calculation on $\begin{bmatrix} Q_1 \\ Q_2 \\ \cdots \\ Q_m \end{bmatrix}$, $\begin{bmatrix} K_{n+1} \\ K_{n+2} \\ \cdots \\ K_{2n} \end{bmatrix}$, and $\begin{bmatrix} V_{n+1} \\ V_{n+2} \\ \cdots \\ V_{2n} \end{bmatrix}$

based on the self-attention mechanism, to obtain a calculation result $\begin{bmatrix} O_1' \\ O_2' \\ \cdots \\ O_m' \end{bmatrix}$

S203

Determine a calculation result $\begin{bmatrix} \alpha_1 Q_1 + \beta_1 O_1' \\ \alpha_2 Q_2 + \beta_2 Q_2' \\ \cdots \\ \alpha_m Q_m + \beta_m Q_m' \end{bmatrix}$ obtained by performing

calculation on $\begin{bmatrix} Q_1 \\ Q_2 \\ \cdots \\ Q_m \end{bmatrix}$, $\begin{bmatrix} K_1 \\ K_2 \\ \cdots \\ K_{2n} \end{bmatrix}$, and $\begin{bmatrix} V_1 \\ V_2 \\ \cdots \\ V_{2n} \end{bmatrix}$ based on the self-attention mechanism

TO
FIG. 7B

FIG. 7A

CONT.
FROM
FIG. 7A

S204

The computing core performs calculation on $\begin{bmatrix} Q_1 \\ Q_2 \\ ... \\ Q_m \end{bmatrix}$, $\begin{bmatrix} K_{2n+1} \\ K_{2n+2} \\ ... \\ K_{3n} \end{bmatrix}$, and $\begin{bmatrix} V_{2n+1} \\ V_{2n+2} \\ ... \\ V_{3n} \end{bmatrix}$

based on the self-attention mechanism, to obtain a calculation result $\begin{bmatrix} O_1" \\ O_2" \\ ... \\ O_m" \end{bmatrix}$

S205

Determine a calculation result $\begin{bmatrix} \alpha_1'(\alpha_1 Q_1 + \beta_1 O_1') + \beta_1' O_1" \\ \alpha_2'(\alpha_2 Q_2 + \beta_2 Q_2') + \beta_1' O_2" \\ ... \\ \alpha_m'(\alpha_m Q_m + \beta_m Q_m') + \beta_1' O_m" \end{bmatrix}$ obtained by performing

calculation on $\begin{bmatrix} Q_1 \\ Q_2 \\ ... \\ Q_m \end{bmatrix}$, $\begin{bmatrix} K_1 \\ K_2 \\ ... \\ K_{3n} \end{bmatrix}$, and $\begin{bmatrix} V_1 \\ V_2 \\ ... \\ V_{3n} \end{bmatrix}$ based on the self-attention mechanism

Continue to traverse remaining submatrices in a matrix

K and a matrix V to obtain a calculation result $\begin{bmatrix} O_1^{(y)} \\ O_2^{(y)} \\ ... \\ O_m^{(y)} \end{bmatrix}$

TO
FIG. 7C

FIG. 7B

CONT.
FROM
FIG. 7B

S206

The computing core performs calculation on $\begin{bmatrix} Q_1 \\ Q_2 \\ \dots \\ Q_m \end{bmatrix}$, $\begin{bmatrix} K_{N-y} \\ K_{N-y+1} \\ \dots \\ K_N \end{bmatrix}$, and $\begin{bmatrix} V_{N-y} \\ V_{N-y+1} \\ \dots \\ V_N \end{bmatrix}$

based on the self-attention mechanism, to obtain a calculation result $\begin{bmatrix} O_1^{(N)} \\ O_2^{(N)} \\ \dots \\ O_m^{(N)} \end{bmatrix}$

S207

Determine a calculation result $\begin{bmatrix} \alpha_1^{(y)}Q_1^{(y)} + \beta_1^{(y)}O_1^{(N)} \\ \alpha_2^{(y)}Q_2^{(y)} + \beta_2^{(y)}Q_2^{(N)} \\ \dots \\ \alpha_m^{(y)}Q_m^{(y)} + \beta_m^{(y)}Q_m^{(N)} \end{bmatrix}$ obtained by performing

calculation on $\begin{bmatrix} Q_1 \\ Q_2 \\ \dots \\ Q_m \end{bmatrix}$, $\begin{bmatrix} K_1 \\ K_2 \\ \dots \\ K_N \end{bmatrix}$, and $\begin{bmatrix} V_1 \\ V_2 \\ \dots \\ V_N \end{bmatrix}$ based on the self-attention mechanism

FIG. 7C

FIG. 8

FIG. 9

FIG. 10

FIG. 11

FIG. 12

S208

Divide a matrix Q, a matrix K, and a matrix V into submatrices based on an SRAM capacity corresponding to a computing core

After the matrix Q, the matrix K, and the matrix V are divided into submatrices, perform calculation according to a process of S201 to S207

FIG. 13

FIG. 14

EP 4 749 483 A1

S304

A computing core determines a value of x, a value of $y_1$, and/or a value of $y_2$ based on an SRAM capacity of the computing core

S301

The computing core determines a first result O' of performing calculation on a first matrix, a first submatrix K', and a second submatrix V' based on a self-attention mechanism

S302

The computing core determines a second result O" of performing calculation on the first matrix, a third submatrix K", and a fourth submatrix V" based on the self-attention mechanism

S303

The computing core determines a third result based on at least the first result O' and the second result O"

FIG. 15

40

Computing core 4n

⋮

Computing core 42

Computing core 41

Division unit
413

Self-attention computing
unit 411

Fusion unit
412

FIG. 16

50

Computing core 5n

⋮

Computing core 52

Computing core 51

Processor
511

514

Memory 512

Division unit
413

Self-attention
computing unit 411

Fusion unit
412

Communication
interface 513

FIG. 17

60

Computing core 62n

⋮

Computing core 622

Control apparatus
61

Computing core 621

FIG. 18

## INTERNATIONAL SEARCH REPORT

| International application No. |
|---|
| **PCT/CN2024/083829** |

| A. | CLASSIFICATION OF SUBJECT MATTER |
|---|---|

G06F 17/16(2006.01)i

According to International Patent Classification (IPC) or to both national classification and IPC

| B. | FIELDS SEARCHED |
|---|---|

Minimum documentation searched (classification system followed by classification symbols)

IPC: G06F,G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 注意力, 关注, 自, 多, 头, 核, 并行, 并发, 拆分, 划分, 分割, 切分, 子矩阵, 子集, 中间结果, 查询, 关键字, 关键词, 值, 矩阵, 键值, attention, self, multi, head, parallel, concurrent, divide, segment, matrix, intermediate, result, query, Q, key, K, value, V

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115859011 A (SHANGHAI ILUVATAR COREX SEMICONDUCTOR CO., LTD.) 28 March 2023 (2023-03-28) description, paragraphs [0005]-[0165], and figures 1-10 | 1-10, 12-13 |
| Y | CN 115859011 A (SHANGHAI ILUVATAR COREX SEMICONDUCTOR CO., LTD.) 28 March 2023 (2023-03-28) description, paragraphs [0005]-[0165], and figures 1-10 | 11 |
| Y | CN 115952393 A (SHANDONG UNIVERSITY) 11 April 2023 (2023-04-11) description, paragraphs [0025]-[0066] | 11 |
| A | CN 113918882 A (PEKING UNIVERSITY) 11 January 2022 (2022-01-11) entire document | 1-13 |
| A | US 2023133305 A1 (KWAI INC.) 04 May 2023 (2023-05-04) entire document | 1-13 |
| A | US 2023135109 A1 (BEIJING BAIDU NETCOM SCIENCE TECHNOLOGY CO., LTD.) 04 May 2023 (2023-05-04) entire document | 1-13 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 June 2024** | **17 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/083829**

| Patent document cited in search report | | | Publication date (day/month/year) | Patent family member(s) | | | Publication date (day/month/year) |
|---|---|---|---|---|---|---|---|
| CN | 115859011 | A | 28 March 2023 | None | | | |
| CN | 115952393 | A | 11 April 2023 | None | | | |
| CN | 113918882 | A | 11 January 2022 | None | | | |
| US | 2023133305 | A1 | 04 May 2023 | None | | | |
| US | 2023135109 | A1 | 04 May 2023 | CN | 114092773 | A | 25 February 2022 |

Form PCT/ISA/210 (patent family annex) (July 2022)

**REFERENCES CITED IN THE DESCRIPTION**

**Patent documents cited in the description**

- CN 202310988066
- CN 202410210715